# EUROPÄISCHE PATENTSCHRIFT

(11) **EP 4 661 988 B1**
(45) Veröffentlichungstag und Bekanntmachung des Hinweises auf die Patenterteilung: **25.11.2026**
(21) Anmeldenummer: 24702050.6
(22) Anmeldetag: 16.01.2024
(51) Int. Cl.: B01D 46/00, B01D 46/24, B01D 46/52, B01D 46/64

(54) **FILTERELEMENT MIT WENIGSTENS ZWEI FILTERMEDIUMKÖRPERN**
FILTER ELEMENT COMPRISING AT LEAST TWO FILTER MEDIUM BODIES
ÉLÉMENT FILTRANT COMPRENANT AU MOINS DEUX CORPS DE MILIEU FILTRANT

(30) Priorität: 07.02.2023 DE 102023102883
(43) Veröffentlichungstag der Anmeldung: 17.12.2025
(73) Patentinhaber: MANN+HUMMEL GmbH, 71636 Ludwigsburg (DE)
(72) Erfinder: NEEF, Pascal, 78647 Trossingen (DE); WITTMERS, Christoph, 74321 Bietigheim-Bissingen (DE); WEBER, Andreas, 71691 Freiberg (DE); STARK, Dennis, 69256 Mauer (DE); RIEGER, Mario, 71638 Ludwigsburg (DE); HANSELMANN, Markus, 74348 Lauffen (DE); PEKNY, Peter, 95339 Neuenmarkt (DE); HALLBAUER, Eva, 95502 Himmelkron (DE); SCHMID, Daniel, 74343 Sachsenheim (DE); GERLACH, Steffen, 71154 Nufringen (DE); KUPFER, Friedrich, 84163 Marklkofen (DE); HETTKAMP, Philipp, 71711 Steinheim (DE); GRAD, Johannes, 94436 Simbach (DE); PEREIRA MADEIRA, Pedro Miguel, 74321 Bietigheim-Bissingen (DE); WEISS, Dieter, 95482 Gefrees (DE)
(74) Vertreter: Mann + Hummel Intellectual Property
(86) Internationale Anmeldenummer: PCT/EP2024/050936
(87) Internationale Veröffentlichungsnummer: WO 2024/165280

(56) Entgegenhaltungen:
- US-A- 6 110 248
- US-A1- 2009 065 425
- US-A1- 2011 311 400
- US-A1- 2017 144 128

## Beschreibung

### Technisches Gebiet

Die Erfindung betrifft ein Filterelement, insbesondere Luftfilterelement, zum Filtern eines Fluids, insbesondere zum Filtern von Luft, für ein Filtersystem, insbesondere für ein Luftfiltersystem eines Brennstoffzellensystems oder für ein Innenraumluftfiltersystem eines Kraftfahrzeugs, mit wenigstens zwei Filtermediumkörpern sowie ein Filtersystem zum Filtern eines Fluids, insbesondere zum Filtern von Luft, insbesondere eines Brennstoffzellensystems oder eines Innenraumluftfiltersystems eines Kraftfahrzeugs.

### Stand der Technik

Brennstoffzellensysteme benötigen häufig einen Partikelfilter und einen Adsorptionsfilter, um sowohl Partikel als auch Schadgase aus der Ansaugluft zu filtern. Die Filtermediumkörper der verschiedenen Filtrationsstufen haben üblicherweise unterschiedliche Abmessungen.

CN212454663U offenbart eine Kraftstofffilterelementstruktur mit dreistufiger Filtration, die ein großes Filterelement zur Realisierung der Filtration der ersten Stufe und der zweiten Stufe und ein kleines Filterelement zur Realisierung der dritten Stufe umfasst. Das kleine Filterelement ist innerhalb des großen Filterelements montiert. Ein Wassertropfenabsetzraum und ein Wasserauslass sind zwischen dem großen Filterelement und dem kleinen Filterelement angeordnet und der Wasserauslass steht mit dem kleinen Filterelement in Verbindung. Der Wasserauslass ist in einem Ende des Wassertropfenabsetzraums ausgebildet, ein Ölauslass ist in der Mitte eines Endes des großen Filterelements und des kleinen Filterelements ausgebildet, und die Ölauslässe stehen mit den Innenräumen der kleinen Filterelemente in Verbindung.

Die Dokumente US 2011/311400 A1, US 2017/144128 A1 sowie US 6 110 248 A offenbaren weitere gattungsbildende Filterelemente.

### Offenbarung der Erfindung

Eine Aufgabe der Erfindung ist es, ein servicefreundliches und kostengünstiges Filterelement mit wenigstens zwei Filtermediumkörpern zum Filtern eines Fluids, insbesondere zum Filtern von Luft zu schaffen.

Eine weitere Aufgabe ist die Bereitstellung eines Filtersystems für ein solches servicefreundliches und kostengünstiges Filterelement.

Die vorgenannte Aufgabe wird nach einem Aspekt der Erfindung gelöst von einem Filterelement mit den Merkmalen des Anspruchs 1.

Die weitere Aufgabe wird gelöst von einem Filtersystem mit den Merkmalen des Anspruchs 15.

Günstige Ausgestaltungen und Vorteile der Erfindung ergeben sich aus den abhängigen Ansprüchen, der Beschreibung und den Zeichnungen.

Es wird nach einem Aspekt der Erfindung ein Filterelement zum Filtern eines Fluids, insbesondere ein Luftfilterelement, für ein Filtersystem, insbesondere für ein Luftfiltersystem eines Brennstoffzellensystems oder für ein Innenraumluftfiltersystem eines Kraftfahrzeugs vorgeschlagen, das wenigstens zwei jeweils als Hohlzylinder ausgebildete Filtermediumkörper aufweist, die sich entlang einer axialen Richtung erstrecken und jeweils in Radialrichtung sowie nacheinander von dem Fluid durchströmbar sind. Ein äußerer Durchmesser des einen der wenigstens zwei Filtermediumkörper ist kleiner ist als ein innerer Durchmesser des anderen der wenigstens zwei Filtermediumkörper, wobei der eine der wenigstens zwei Filtermediumkörper wenigstens bereichsweise entlang der axialen Richtung radial innerhalb des anderen der wenigstens zwei Filtermediumkörper (angeordnet ist und axial aus diesem heraus ragt. An einer Außenmantelfläche eines aus dem anderen der wenigstens zwei Filtermediumkörper heraus ragenden Abschnitts des einen der wenigstens zwei Filtermediumkörper ist ein zumindest teilumfänglicher Mantel angeordnet ist, der dazu ausgebildet ist, die Außenmantelfläche zumindest zeitweise fluidundurchlässig zu verschließen. Einer der wenigstens zwei Filtermediumkörper ist als Partikelfilter ausgebildet und ein anderer der Filtermediumkörper als Adsorptionsfilter.

In Ausführungen kann der eine der Filtermediumkörper, der aus dem anderen der Filtermediumkörper herausragt, als innerer Filtermediumkörper bezeichnet werden und der andere als äußerer Filtermediumkörper.

Der Mantel verschließt zumindest zeitweise, oder in Ausführungsformen auch dauerhaft, eine Außenmantelfläche des aus dem äußeren Filtermediumkörper heraus ragenden Abschnitts des inneren Filtermediumkörpers und macht diese somit undurchlässig für das Fluid. Hierdurch kann sichergestellt werden, dass das Fluid beide Filtermediumkörper in Reihe passiert, so dass der äußere Filtermediumkörper nicht, oder nur, wenn es beabsichtigt ist, umgangen wird. Mit anderen Worten wird durch den Mantel ein unbeabsichtigter Bypass, der den äußeren Filtermediumkörper umgeht, vermieden. Mit "nacheinander von dem Fluid durchströmbar" ist hierin eine serielle Durchströmung der Filtermediumkörper gemeint.

Bei dem vorgeschlagenen Filterelement können beide Filtermediumkörper für die zwei Filtrationsstufen beispielsweise in einem runden Filterelement angeordnet sein. Denkbar ist jedoch auch ein ovales Filterelement. Vorteilhaft können beide Filtermediumkörper konzentrisch zur axialen Richtung angeordnet sein.

Die beiden Filtermediumkörper können als gefalteter Balg, Wickelkörper, Schüttung (vor allem zur Adsorption von Schadgasen), beschichteter Wabenkörper (vor allem zur Adsorption von Schadgasen) oder aus Kombinationen daraus ausgebildet sein. Die Höhe bzw. die Balgbreite der Filtermediumkörper kann unterschiedlich ausgeführt sein. Die Filtrationsstufen können, bezogen auf den Deckel bzw. Boden des Filterelements einseitig bündig, aber auch beidseitig versetzt angeordnet werden. Der höhere bzw. breitere Filtermediumkörper kann sowohl radial innen als auch radial außen angeordnet sein. Die Durchströmung des Filterelements kann sowohl von innen nach außen als auch umgekehrt erfolgen, wobei der Partikelfilter immer zuerst durchströmt wird. Eine Dichtung kann radial innen als auch außenliegend angeordnet sein. So ergibt sich eine große Variabilität zur Anordnung der beiden Filtermediumkörper relativ zueinander bzw. in dem Filterelement.

Gemäß einer günstigen Ausgestaltung des Filterelements kann der in der Strömungsrichtung zuerst durchströmte Filtermediumkörper als Partikelfilter ausgebildet sein. Alternativ oder zusätzlich kann der in der Strömungsrichtung folgende Filtermediumkörper als Adsorptionsfilter, insbesondere als Aktivkohlefilter und/oder als Ionentauscher, ausgebildet sein. Auf diese Weise können zuerst aus dem zu filternden Fluid Staub- und Schmutzpartikel herausgefiltert werden und in dem nachfolgenden Filtermediumkörper dann Schadgase vorteilhaft adsorbiert werden.

Die wenigstens zwei Filtermediumkörper sind wenigstens bereichsweise an einem Rahmenelement angeordnet, wobei wenigstens ein Bereich des Rahmenelements, welcher sich zwischen den wenigstens zwei Filtermediumkörpern erstreckt, wenigstens bereichsweise für die Durchströmung mit dem Fluid durchlässig ist. Der fluiddurchlässige Bereich des Rahmenelements kann insbesondere Bestandteil eines Mittelrohrs sein, das den inneren Filtermediumkörper radial außen umgibt und in einem durch den äußeren Filtermediumkörper bereitgestellten Hohlraum angeordnet ist.

Das Rahmenelement stützt beide Filtermediumkörper gegeneinander ab und nimmt Kräfte, die durch den Druckverlust bei der Durchströmung entstehen auf. Dadurch, dass das Rahmenelement zwischen den beiden Filtermediumkörpern wenigstens bereichsweise für die Durchströmung mit dem Fluid durchlässig ist, können beide Filtermediumkörper vorteilhaft nacheinander durchströmt werden, so dass zuerst die eine Filtrationsstufe durchlaufen und nachfolgend die zweite Filtrationsstufe. Der zur Verfügung stehende Bauraum kann so besser ausgenutzt werden. Daraus ergeben sich Vorteile in Bezug auf Adsorptionsvermögen, Staubkapazität, Abscheidegrad, und Druckverlust des Filterelements.

Der Mantel wird durch einen fluidundurchlässigen Bereich des Rahmenelements gebildet. Insbesondere kann sich hierbei der fluidundurchlässige Bereich des Rahmenelements in der axialen Richtung an den fluiddurchlässigen Bereich anschließen. Der fluiddurchlässige Bereich des Rahmenelements und der fluidundurchlässige Bereich des Rahmenelements können insbesondere einteilig sein und beispielsweise durch Kunststoffspritzgießen erzeugt werden. In Ausführungen kann vorgesehen sein, dass der fluiddurchlässige Bereich des Rahmenelements und der fluidundurchlässige Bereich des Rahmenelements in einem gemeinsamen Mittelrohr ausgebildet sind, das den inneren Filtermediumkörper radial außen umgibt und in einem durch den äußeren Filtermediumkörper bereitgestellten Hohlraum angeordnet ist. In einem nicht von dem äußeren Filtermediumkörper umschlossenen Bereich, d.h. in dem Bereich, in dem der innere Filtermediumkörper axial aus dem äußeren Filtermediumkörper heraus ragt, ist das Rahmenelement fluidundurchlässig und bildet den Mantel, während in einem Bereich, in dem der äußere Filtermediumkörper den inneren umgibt, das Rahmenelement fluiddurchlässig ist.

In anderen Ausführungen kann der Mantel aber auch von dem fluiddurchlässigen Bereich des Rahmenelements separat ausgebildet sein, beispielsweise in Form einer über den aus dem äußeren Filtermediumkörper herausragenden Abschnitt des inneren Filtermediumkörpers gezogene umfängliche Hülle oder Kappe.

Gemäß einer günstigen Ausgestaltung des Filterelements können die wenigstens zwei Filtermediumkörper eine unterschiedliche axiale Erstreckung aufweisen. Alternativ oder zusätzlich können die wenigstens zwei Filtermediumkörper eine unterschiedliche Dicke aufweisen. Die Filtermediumkörper können so bezüglich ihrer gewünschten Filterwirkung mit unterschiedlichen Abmessungen ausgestaltet sein.

Gemäß einer günstigen Ausgestaltung des Filterelements kann der eine der wenigstens zwei Filtermediumkörper mit einer axialen Erstreckung, die größer ist als die axiale Erstreckung des anderen der wenigstens zwei Filtermediumkörper, radial innerhalb oder außerhalb des anderen der wenigstens zwei Filtermediumkörper angeordnet sein. So kann, je nach gewünschter Strömungsführung im Filtergehäuse die Anordnung der beiden Filtermediumkörper zueinander flexibel gestaltet werden.

Gemäß einer günstigen Ausgestaltung des Filterelements kann der eine der wenigstens zwei Filtermediumkörper mit einer Dicke, die größer ist als die Dicke des anderen der wenigstens zwei Filtermediumkörper, radial innerhalb oder außerhalb des anderen der wenigstens zwei Filtermediumkörper angeordnet sein. So können die Filtermediumkörper nach gewünschter Filterwirkung und Bauraum unterschiedlich gestaltet werden und je nach gewünschter Strömungsführung im Filtergehäuse auch unterschiedlich angeordnet werden.

Gemäß einer günstigen Ausgestaltung des Filterelements können die wenigstens zwei Filtermediumkörper bezüglich wenigstens einer ihrer beiden Stirnseiten bündig angeordnet sein. Alternativ können die wenigstens zwei Filtermediumkörper bezüglich ihrer beiden Stirnseiten beidseitig versetzt angeordnet sein. Damit kann die axiale Position der beiden Filtermediumkörper zueinander variabel, je nach Bauraum, welcher zur Verfügung steht, gestaltet werden.

Gemäß einer günstigen Ausgestaltung des Filterelements kann die Strömungsrichtung des Fluids in radialer Richtung nach außen oder nach innen gerichtet sein. Der Aufbau des Filtersystems kann dadurch, insbesondere bezüglich Strömungsführung des zu filternden Fluids, geeignet gestaltet werden.

Gemäß einer günstigen Ausgestaltung des Filterelements kann der Mantel, insbesondere der durch den fluidundurchlässigen Bereich des Rahmenelements gebildete Mantel, wenigstens an einer ersten und/oder zweiten Stirnseite der wenigstens zwei Filtermediumkörper mit einer Endscheibe verbunden sein, insbesondere in die Endscheibe eingebettet sein. Der Mantel, insbesondere der durch den fluidundurchlässigen Bereich des Rahmenelements gebildete Mantel, kann so als integraler Bestandteil des Filterelements das Filterelement mit wenigstens einer Endscheibe an einer der Stirnseiten dicht abschließen.

Gemäß einer weiteren Ausführungsform kann das Rahmenelement eine äußere Hülse aufweisen, die eine Außenmantelfläche eines radial äußeren der wenigstens zwei Filtermediumkörper umgibt, wobei insbesondere die äußere Hülse des Rahmenelements fluidundurchlässig ausgebildet ist und mit einer der Endscheiben verbunden ist. Die äußere Hülse kann hierbei insbesondere in ein Material der Endscheibe eigebettet sein. Die äußere Hülse des Rahmenelements kann von dem Mantel separat ausgebildet sein. In anderen Ausführungen können Mantel und äußere Hülse auch einteilig sein und gemeinsam durch Kunststoffspritzgießen erzeugt werden. Die äußere Hülse kann insbesondere umfänglich geschlossen ausgebildet sein und/oder den äußeren Filtermediumkörper vollumfänglich umgeben. Die Verbindung der äußeren Hülse mit der Endscheibe kann insbesondere eine fluiddichte Verbindung sein, so dass die Hülse mit anderen Worten als Dichthülse bezeichnet werden kann.

Gemäß einer günstigen Ausgestaltung des Filterelements kann das Rahmenelement wenigstens ein Dichtelement aufweisen, welches zur Abdichtung in axialer und/oder radialer Richtung zwischen einer Rohseite und einer Reinseite bei bestimmungsgemäßem Einbau des Filterelements in einem Filtergehäuse des Filtersystems ausgebildet ist. Insbesondere kann dabei das Dichtelement radial außerhalb der wenigstens zwei Filtermediumkörper angeordnet sein und zur Abdichtung zwischen einem ersten Gehäuseteil und einem zweiten Gehäuseteil des Filtergehäuses des Filtersystems ausgebildet sein. Auf diese Weise kann die Abdichtung sowohl des Filterelements als auch der beiden Gehäuseteile durch ein Dichtelement ausgeführt werden.

Gemäß einer günstigen Ausführungsform kann das Dichtelement an der äußeren Hülse des Rahmenelements angeordnet sein und insbesondere in der axialen Richtung von der Endscheibe beabstandet sein. Insbesondere kann die Dichtung an einem freien, von der Endscheibe beabstandeten Umfangsrand der äußeren Hülse vorliegen. Hierdurch ist es möglich, die Position der Abdichtung axial von der Endscheibe zu beabstanden, was für bestimmte Bauraumformen und/oder -größen Vorteile haben kann. Ferner wird es hierdurch ermöglicht, die Endscheibe und/oder den Filtermediumkörper von Dichtungsvorspannkräften freizuhalten, die zu unerwünschten Verformungen führen können.

Gemäß einer weiteren günstigen Ausgestaltung des Filterelements kann wenigstens eine der Endscheiben ein integriertes Dichtelement aufweisen, welches zur Abdichtung in axialer und/oder radialer Richtung zwischen der Rohseite und der Reinseite bei bestimmungsgemäßem Einbau des Filterelements in dem Filtergehäuse ausgebildet ist. Dadurch kann die Abdichtung nach Einsetzen des Filterelements in ein Gehäuseteil und Schließen des Filtergehäuses durch Aufsetzen eines zweiten Gehäuseteils vorteilhaft erfolgen.

Gemäß einer günstigen Ausgestaltung des Filterelements kann das Dichtelement an einer radialen Innenkante oder an einer radialen Außenkante der Endscheibe angeordnet sein. So kann die Abdichtung des Filterelements an verschiedene Bauräume und/oder Gehäusegeometrien und Ausführungen angepasst werden.
Gemäß einer günstigen Ausgestaltung des Filterelements kann der erste und/oder der zweite Filtermediumkörper als gefalteter Filterbalg, und/oder als Wickelkörper und/oder als Schüttung, und/oder als beschichteter Wabenkörper ausgebildet sein. Unterschiedliche Filtermediumkörper können je nach Randbedingungen des zu filternden Fluids geeignet gewählt werden.

Gemäß einer günstigen Ausgestaltung des Filterelements kann wenigstens einer der beiden Filtermediumkörper als gefalteter Filterbalg ausgebildet sein. Der erste und/oder der zweite Filtermediumkörper kann endscheibenfrei ausgebildet sein. Dabei können Stirnkanten von Falten des wenigstens einen der beiden Filtermediumkörper an dessen ersten und/oder zweiten Stirnseite zwischen den Falten mit einem Abdichtungsmaterial abgedichtet sein. Auf diese Weise kann die zur Verfügung stehende Filterfläche vorteilhaft vergrößert werden. Mit anderen Worten kann hierdurch eine zur Einströmung und/oder Ausströmung vorgesehene Querschnittsfläche vergrößert werden, was zu einem geringeren Strömungswiderstand führt.

Gemäß einer günstigen Ausgestaltung des Filterelements kann der Mantel, insbesondere der durch den fluidundurchlässigen Bereich des Rahmenelements gebildete Mantel, wenigstens bereichsweise einen wenigstens zeitweise offenen Bereich zur wenigstens zeitweisen Durchströmung mit dem Fluid aufweisen, welcher mit einer schaltbaren Abdeckung verschließbar ist. Durch die schaltbare Abdeckung lässt sich die Lebensdauer einer der beiden Filtermediumkörper vorteilhaft verlängern. Auf diese Weise kann bei wenigstens teilweise geöffneter Abdeckung einer der beiden Filtermediumkörper, beispielsweise ein Aktivkohlebalg, zumindest teilweise umgangen werden, so dass seine Standzeit sich verlängert. Die schaltbare Abdeckung kann beispielsweise in Abhängigkeit von Umgebungsluftqualitätsdaten angesteuert werden. Somit lassen sich durch die schaltbare Abdeckung, abhängig von den Umgebungsluftqualitätsdaten, die Filterstufen (Partikelfiltration und Schadgasadsorption) optimal nutzen. Beispielsweise kann in einem Betriebszustand mit geringer Partikelbelastung jedoch hoher Schadgasbelastung (z.B. Fahrt durch eine Stadt) die Partikelfilterstufe durch Öffnen der schaltbaren Abdeckung umgangen werden. Dies verringert den Durchflusswiderstand und somit den Energieverbrauch. In Ausführungsformen kann dies bei umgekehrten Umgebungsbedingungen (hohe Partikelbelastung, niedrige Schadgasbelastung) analog umsetzbar sein.

Gemäß einer günstigen Ausgestaltung des Filterelements kann die Abdeckung als um die axiale Richtung drehbare Schalthülse, und/oder als in der axialen Richtung verschiebbare Schalthülse, und/oder als in der axialen Richtung beweglichen Faltenbalg, und/oder als Rollo ausgebildet sein. Unterschiedliche Ausführungen der schaltbaren Abdeckung können je nach Ausführung des Filtermediumkörpers geeignet gewählt und mit einem passenden Aktor, beispielsweise einem Elektromotor, angesteuert werden. Der Aktor kann vorteilhaft direkt am Filterelement oder an dem Filtergehäuse angeordnet sein. Denkbar ist auch eine Ansteuerung der Abdeckung statt durch einen Elektromotor durch Unterdruck.

Es wird nach einem weiteren Aspekt der Erfindung ein Filtersystem zum Filtern eines Fluids, insbesondere zum Filtern von Luft, insbesondere eines Brennstoffzellensystems oder Innenraumluftfiltersystems eines Kraftfahrzeugs, vorgeschlagen, mit einem Filtergehäuse mit einem Fluideinlass und einem Fluidauslass, und mit wenigstens einem erfindungsgemäßen Filterelement, welches zwischen dem Fluideinlass und dem Fluidauslass in dem Filtergehäuse angeordnet ist.

Das vorgeschlagene Filtersystem kann vorteilhaft zum Filter der Ansaugluft eines Brennstoffzellensystems eingesetzt werden. Dabei kann das Filterelement wenigstens zwei Filtermediumkörper aufweisen, die nacheinander durchströmt werden. So kann beispielsweise der in der Strömungsrichtung zuerst durchströmte Filtermediumkörper als Partikelfilter ausgebildet sein. Alternativ oder zusätzlich kann der in der Strömungsrichtung folgende Filtermediumkörper als Adsorptionsfilter, insbesondere als Aktivkohlefilter und/ oder als Ionentauscher, ausgebildet sein. Auf diese Weise können zuerst aus dem zu filternden Fluid Staub- und Schmutzpartikel herausgefiltert werden und in dem nachfolgenden Filtermediumkörper dann Schadgase vorteilhaft adsorbiert werden. Vorteilhaft können die beiden Filtermediumkörper konzentrisch zur axialen Richtung angeordnet sein.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen beispielhaft:
- Fig. 1: einen Längsschnitt durch ein Filtersystem zum Filtern eines Fluids, insbesondere zum Filtern von Luft, insbesondere eines Brennstoffzellensystems, nach einem Ausführungsbeispiel der Erfindung mit einem Filterelement mit zwei Filtermediumkörpern;
- Fig. 2: eine isometrische Explosionsdarstellung des Filterelements nach Figur 1;
- Fig. 3: eine isometrische Explosionsdarstellung des Filtersystems nach Figur 1;
- Fig. 4: einen Längsschnitt durch ein Filtersystem nach einem weiteren Ausführungsbeispiel der Erfindung;
- Fig. 5: eine isometrische Darstellung des Filterelements des Filtersystems nach Figur 4;
- Fig. 6: eine geschnittene Draufsicht auf das Filterelement nach Figur 5;
- Fig. 7: einen Längsschnitt durch ein Filtersystem nach einem weiteren Ausführungsbeispiel der Erfindung;
- Fig. 8: eine isometrische Explosionsdarstellung des Filterelements nach Figur 7;
- Fig. 9: einen Längsschnitt durch ein Filtersystem nach einem weiteren Ausführungsbeispiel der Erfindung;
- Fig. 10: eine isometrische Explosionsdarstellung des Filterelements nach Figur 9;
- Fig. 11: einen Längsschnitt durch ein Filtersystem nach einem weiteren Ausführungsbeispiel der Erfindung;
- Fig. 12: eine isometrische Explosionsdarstellung des Filterelements nach Figur 11;
- Fig. 13: eine isometrische Darstellung eines Filterelements nach einem weiteren Ausführungsbeispiel der Erfindung mit einer drehbaren Schalthülse als Abdeckung;
- Fig. 14: das Filterelement nach Figur 13 mit teilweise geschlossener Abdeckung;
- Fig. 15: einen Längsschnitt durch das Filterelement nach Figur 13;
- Fig. 16: eine isometrische Darstellung eines Filterelements nach einem weiteren Ausführungsbeispiel der Erfindung mit einer axial verschiebbaren Schalthülse als Abdeckung;
- Fig. 17: das Filterelement nach Figur 16 mit teilweise geschlossener Abdeckung;
- Fig. 18: einen Längsschnitt durch das Filterelement nach Figur 16;
- Fig. 19: eine isometrische Darstellung eines Filterelements nach einem weiteren Ausführungsbeispiel der Erfindung mit einem Faltenbalg als Abdeckung;
- Fig. 20: das Filterelement nach Figur 19 mit teilweise geschlossener Abdeckung; und
- Fig. 21: einen Längsschnitt durch das Filterelement nach Figur 19.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

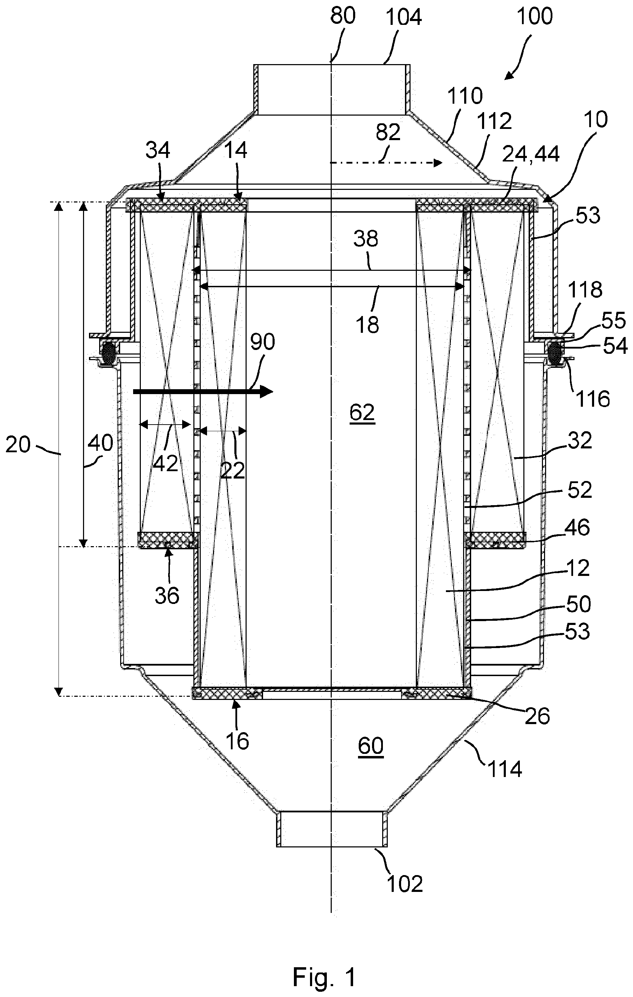

Figur 1 zeigt einen Längsschnitt durch ein Filtersystem 100 zum Filtern eines Fluids, insbesondere zum Filtern von Luft, insbesondere eines Brennstoffzellensystems, nach einem Ausführungsbeispiel der Erfindung mit einem Filterelement 10 mit zwei Filtermediumkörpern 12, 32.

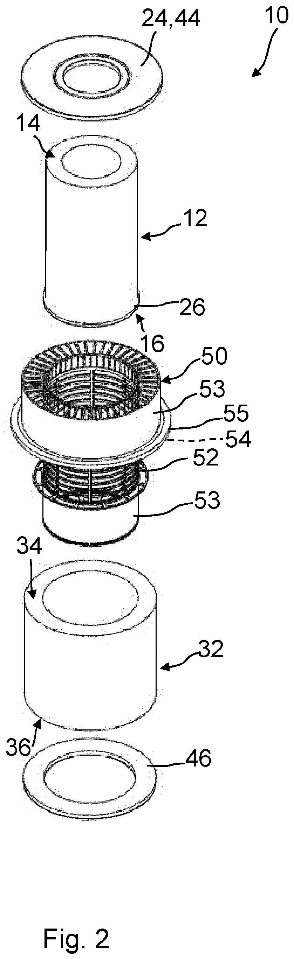

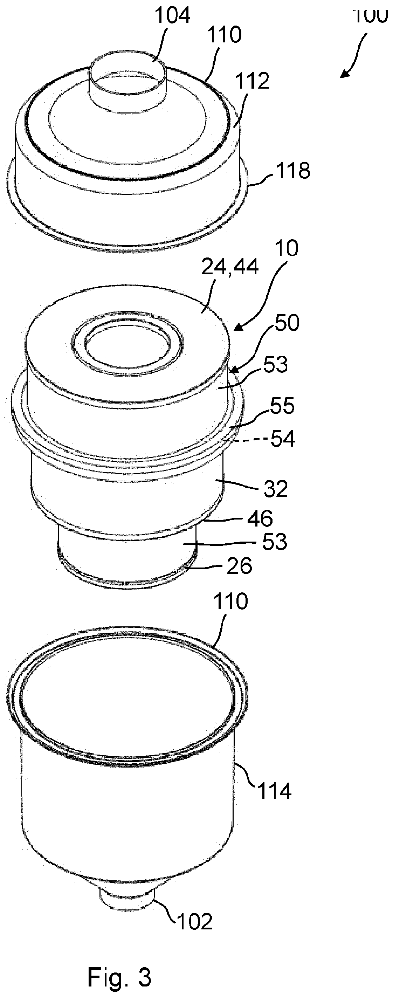

Figur 2 zeigt eine isometrische Explosionsdarstellung des Filterelements 10 nach Figur 1, während in Figur 3 eine isometrische Explosionsdarstellung des Filtersystems 100 nach Figur 1 dargestellt ist.

Das Filtersystem 100 weist ein Filtergehäuse 110 mit einem Fluideinlass 102 und einem Fluidauslass 104 auf, in welchem wenigstens ein Filterelement 10 zwischen dem Fluid-einlass 102 und dem Fluidauslass 104 angeordnet ist.

Das Filterelement 10 umfasst zwei konzentrische, als Hohlzylinder ausgebildete Filtermediumkörper 12, 32, die sich entlang einer axialen Richtung 80 erstrecken, und welche bei bestimmungsgemäßem Gebrauch radial und nacheinander bzw. seriell von dem Fluid durchströmbar angeordnet sind.

Ein äußerer Durchmesser 18 des einen der beiden Filtermediumkörper 12, 32 ist kleiner als ein innerer Durchmesser 38 des anderen der beiden Filtermediumkörper 12, 32. Einer der beiden Filtermediumkörper 12, 32 ist wenigstens bereichsweise entlang der axialen Richtung 80 radial innerhalb des anderen der beiden Filtermediumkörper 12, 32 angeordnet. Ein radial innerer der Filtermediumkörper 12 ragt axial aus einem radial äußeren der Filtermediumkörper 32 hervor.

An den Filtermediumkörpern 12, 32 ist wenigstens bereichsweise ein Rahmenelement 50 angeordnet. Das Rahmenelement 50 oder Stützrohr dient der Positionierung der beiden Filtermediumkörper 12, 32 und stützt auch die Filtermedien der Filtermediumkörper 12, 32 gegeneinander sowie gegen den Druck des strömenden Fluids ab.
Dabei ist wenigstens ein Bereich 52 des Rahmenelements 50, welcher sich zwischen den wenigstens zwei Filtermediumkörpern 12, 32 erstreckt, wenigstens bereichsweise für die Durchströmung mit dem Fluid durchlässig, so dass das zu filternde Fluid erst den einen Filtermediumkörper 32 und dann den anderen Filtermediumkörper 12 durchströmen kann.

Bei dem dargestellten Ausführungsbeispiel strömt das zu filternde Fluid durch den Fluideinlass 102 in die Rohseite 60 des Filtergehäuses 110, wo es das Filterelement 10 in radialer Richtung 90, wie mit dem Pfeil angedeutet, durchströmen kann. So wird erst der radial außen angeordnete Filtermediumkörper 32 durchströmt. Von diesem kann das Fluid durch den teilweise durchlässigen Bereich 52 des Rahmenelements 50 den zweiten Filtermediumkörper 12 durchströmen und gelangt so in den Reinbereich 62. Von dort kann das Fluid durch den Fluidauslass 104 das Filtergehäuse 110 verlassen.

In alternativen Ausführungsformen kann das Fluid das Filterelement 10 auch von radial innen nach radial außen durchströmen.

Der in der Strömungsrichtung 90 zuerst durchströmte Filtermediumkörper 32 kann bei einem Luftfiltersystem eines Brennstoffzellensystems vorteilhaft als Partikelfilter ausgebildet sein. Der in der Strömungsrichtung 90 folgende Filtermediumkörper 12 kann dann als Adsorptionsfilter, insbesondere als Aktivkohlefilter und/oder als Ionentauscher, ausgebildet sein.

Die Filtermediumkörper 12, 32 können beispielsweise als gefalteter Filterbalg, und/oder als Wickelkörper ausgebildet sein. Ein Filtermediumkörper 12, 32 zur Adsorption von Schadgasen kann insbesondere als Schüttung, und/oder als beschichteter Wabenkörper ausgebildet sein.

Die zwei Filtermediumkörper 12, 32 können eine unterschiedliche axiale Erstreckung 20, 40 aufweisen. Der eine der beiden Filtermediumkörper 12 mit einer axialen Erstreckung 20, die größer ist als die axiale Erstreckung 40 des anderen der Filtermediumkörper 32 ist radial innerhalb des anderen Filtermediumkörpers 12, 32 angeordnet. Die Dicke 42 des äußeren Filtermediumkörpers 32 ist etwas größer als die Dicke 22 des inneren Filtermediumkörpers 12.

In diesem Ausführungsbeispiel ist demzufolge der Filtermediumkörper 32 mit der größeren Dicke 42 radial außerhalb des anderen der beiden Filtermediumkörper 12, 32 angeordnet. Alternativ ist jedoch auch möglich, dass der Filtermediumkörper 12, 32 mit der größeren Dicke 22, 42 radial innerhalb des anderen der beiden Filtermediumkörper 12, 32 angeordnet ist.

Die Filtermediumkörper 12, 32 sind an ihren Stirnseiten 14, 16; 34, 36 mit Endscheiben 24, 26; 44, 46, beispielsweise aus Polyurethan (PUR) abgeschlossen. Beiden Filtermediumkörper 12, 32 sind mit den Endscheiben 24, 44 bezüglich der ersten Stirnseiten 14, 34 bündig angeordnet. Das Rahmenelement 50 ist so an den ersten Stirnseiten 14, 34 der beiden Filtermediumkörper 12, 32 von den Endscheiben 24, 44, insbesondere formschlüssig, umschlossen.

Das Rahmenelement 50 weist eine äußere Hülse 51 auf, die den radial äußeren Filtermediumkörper 32 an seiner radialen Außenseite wenigstens teilweise umgreift und fluidundurchlässig ausgebildet ist. An der äußeren Hülse 51 ist ein Dichtelement 54 angeordnet, welches zur Abdichtung in axialer und/oder radialer Richtung 80, 82 zwischen der Rohseite 60 und der Reinseite 62 bei bestimmungsgemäßem Einbau des Filterelements 10 in dem Filtergehäuse 110 des Filtersystems 100 ausgebildet ist. Insbesondere ist das Dichtelement 54 radial außerhalb der beiden Filtermediumkörper 12, 32 angeordnet dichtet zwischen dem ersten Gehäuseteil 112 und dem zweiten Gehäuseteil 114 des Filtergehäuses 110 des Filtersystems 100 ab. Die äußere Hülse 51 ist insbesondere umfänglich geschlossen und umgibt den äußeren Filtermediumkörper 32 vollumfänglich. Mit ihren der Endscheibe 24,44 zugewandten Ende ist die äußere Hülse 51 mit der Endscheibe 24,44 verbunden, insbesondere fluiddicht verbunden. Das Dichtelement 54 ist hingegen an einem der Endscheibe 24,44 abgewandten Ende der äußeren Hülse 51 bzw. an einem freien Umfangsrand der äußeren Hülse 51 angeordnet und somit axial von der Endscheibe 24,44 beabstandet.

Ein nicht von dem äußeren Filtermediumkörper 32 umschlossener Abschnitt des inneren Filtermediumkörpers 12 ist von einem Mantel 53' abgedeckt. Der Mantel 53' ist an einer Außenmantelfläche eines aus dem äußeren Filtermediumkörper 32 heraus ragenden Abschnitts des inneren Filtermediumkörpers 12 angeordnet und ist fluidundurchlässig ausgebildet. Auf diese Weise ist das Fluid gezwungen, zuerst den äußeren Filtermediumkörper 32 des Filterelements 10 zu durchströmen, bevor es den inneren Filtermediumkörper 12 durchströmen kann. Dadurch ist gewährleistet, dass zuerst mit dem äußeren Filtermediumkörper 32 die Partikel aus dem Fluid gefiltert werden, bevor die Schadgase in dem inneren Filtermediumkörper 12 adsorbiert werden.

Der Mantel 53' ist durch einen fluidundurchlässigen Bereich 53 des Rahmenelements 50 gebildet, wobei sich der fluidundurchlässige Bereich 53 des Rahmenelements 50 in der axialen Richtung 80 an den fluiddurchlässigen Bereich 52 anschließt. Der fluiddurchlässige Bereich 52 des Rahmenelements 50 und der fluidundurchlässige Bereich 53 des Rahmenelements 50 können einteilig sein und sind insbesondere Teil eines gemeinsamen Mittelrohrs, das insbesondere ein Kunststoffspritzgussteil sein kann. Das gemeinsame Mittelrohr umgibt den radial inneren Filtermediumkörper 12 radial außen und ist in einem durch den radial äußeren Filtermediumkörper 32 bereitgestellten Hohlraum angeordnet. In einem nicht von dem radial äußeren Filtermediumkörper 32 umschlossenen Bereich, d.h. in dem Bereich, in dem der radial innere Filtermediumkörper 12 axial aus dem radial äußeren Filtermediumkörper 32 heraus ragt, ist das Rahmenelement 50 fluidundurchlässig und bildet den Mantel 53', während in einem Bereich, in dem der äußere Filtermediumkörper 32 den inneren Filtermediumkörper 12 umgibt, das Rahmenelement 50 fluiddurchlässig ist.

In Figur 2 sind die einzelnen Komponenten des Filterelements 10 dargestellt. So sind die beiden Filtermediumkörper 12, 32 mit ihren Endscheiben 24, 26; 44, 46 zu erkennen. Dabei sind die beiden Endscheiben 24, 44 der ersten Stirnseiten 14, 34 als eine gemeinsame Endscheibe 24, 44 ausgebildet. Weiter ist das Gerüst des Rahmenelements 50 erkennbar, in welches die beiden Filtermediumkörper 12, 32 eingeschoben werden. Auch sind sowohl fluiddurchlässige Bereich 52 als auch fluidundurchlässige Bereiche 53 des Rahmenelements 50 sowie die äußere Hülse 51 erkennbar.

Figur 3 zeigt die beiden Gehäuseteile 112, 114 des Filtergehäuses 110, sowie das zusammengesetzte Filterelement 10 mit der radial außen angeordneten Dichtungsaufnahme 55. Das Dichtelement 54 ist in dieser Darstellung nicht erkennbar, da es in der Dichtungsaufnahme 55 angeordnet ist.

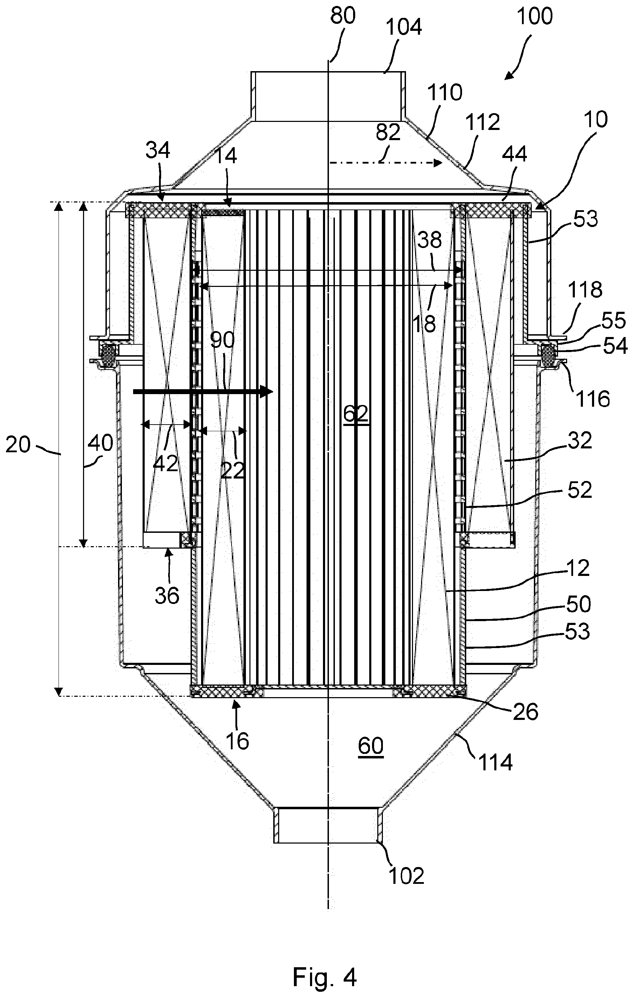

Figuren 4 bis 6 zeigen ein weiteres Ausführungsbeispiel der Erfindung.

Figur 4 zeigt einen Längsschnitt durch ein Filtersystem 100 nach einem weiteren Ausführungsbeispiel der Erfindung.

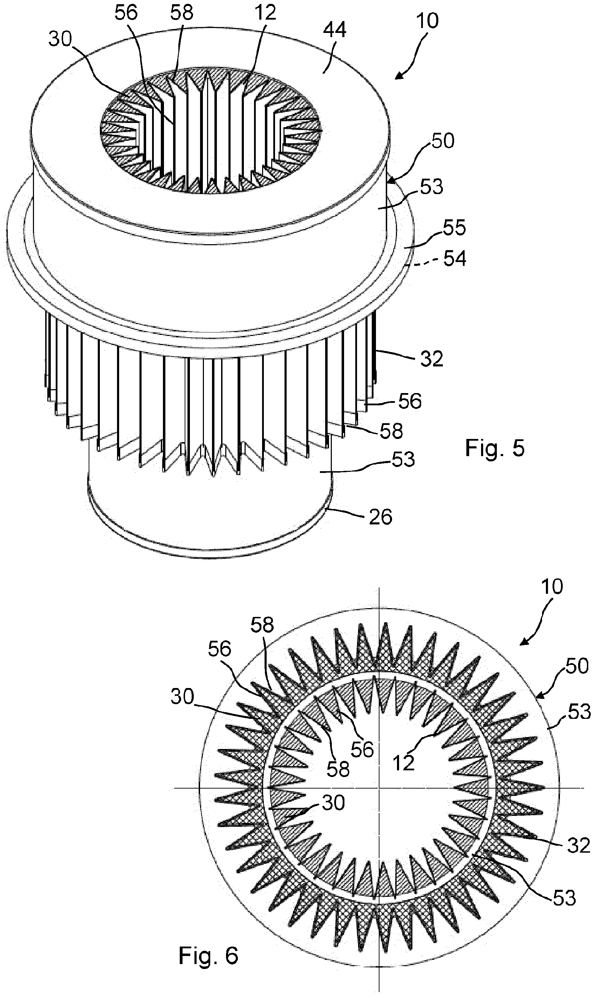

Das Filtersystem 100 wie auch das Filterelement 10 ist im Grunde sehr ähnlich wie bei dem in den Figuren 1 bis 3 dargestellten Ausführungsbeispiel. Der wesentliche Unterschied ist in Figur 5, wo eine isometrische Darstellung des Filterelements 10 dargestellt ist und in Figur 6, wo eine geschnittene Draufsicht auf das Filterelement 10 gezeigt ist, erkennbar.

Die zweite Stirnseite 36 des äußeren Filtermediumkörpers 32 und die erste Stirnseite 14 des inneren Filtermediumkörpers 12 sind ohne Endscheiben ausgebildet.

Die beiden konzentrischen Filtermediumkörper 12, 32 sind jeweils als gefalteter Filterbalg ausgebildet. Dabei sind Stirnkanten 58 von Falten 56 der Filtermediumkörper 12, 32 jeweils an der ersten und zweiten Stirnseite 14, 36 zwischen den Falten 56 mit einem Abdichtungsmaterial 30 abgedichtet, beispielsweise mit einer Leimraupe verleimt. So können wechselseitig offene Stirnflächen 14, 36 der Filtermediumkörper 12, 32 durch einseitige Verklebung und/oder Abdichtung des Faltenendes und/oder Stirnkanten 58 mittels einer Leimspur zwischen den Falten 56 geeignet abgedichtet werden. Dies erhöht vorteilhaft den freien Raum für die Fluidströmung zwischen den Falten 56.

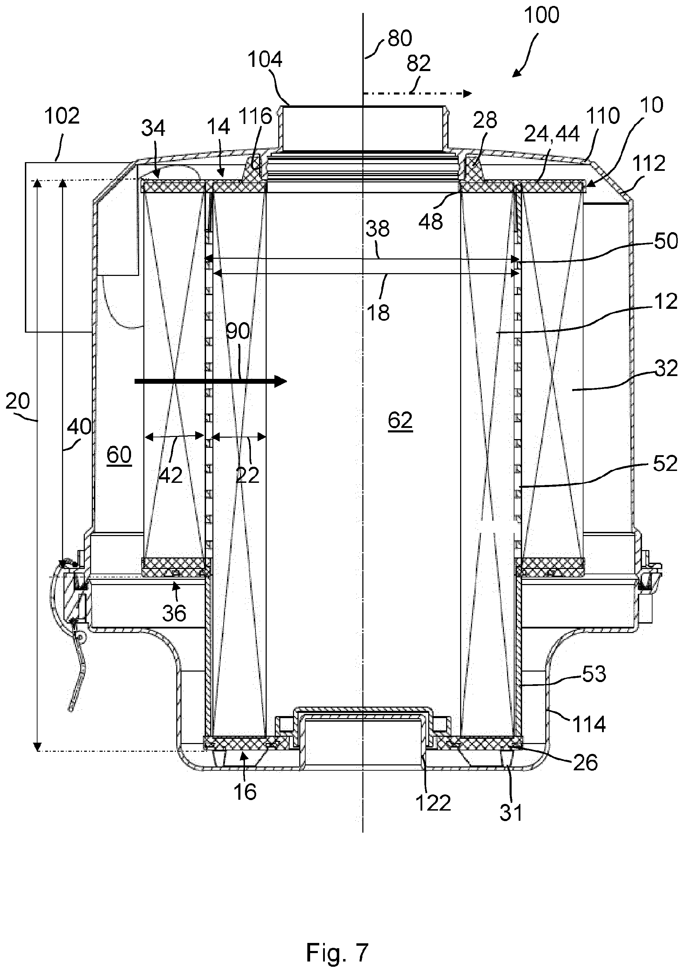

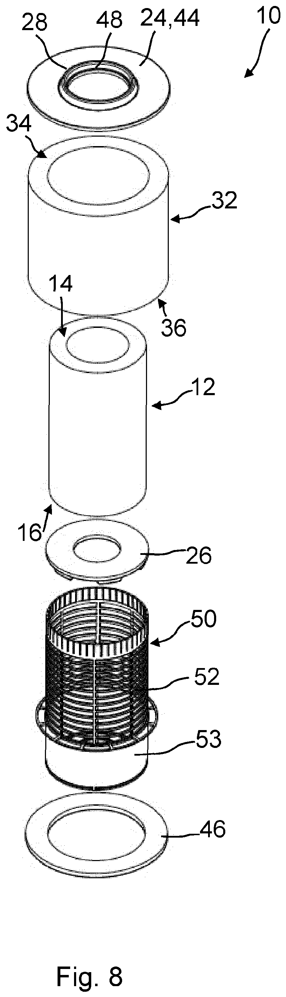

In Figur 7 ist ein Längsschnitt durch ein Filtersystem nach einem weiteren Ausführungsbeispiel der Erfindung dargestellt. Figur 8 zeigt dazu eine isometrische Explosionsdarstellung des Filterelements 10 nach Figur 7.

Der Fluideinlass 102 ist bei diesem Ausführungsbeispiel für eine tangentiale Anströmung des Filterelements 10 von radial außen an dem ersten Gehäuseteil 112 angeordnet. Der Fluidauslass 104 ist wie bei den vorigen Ausführungsbeispielen zentral im ersten Gehäuseteil 112.

Die beiden Filtermediumkörper 12, 32 sind an dem Rahmenelement 50, das den Mantel 53' aufweist, gleich angeordnet wie bei den beiden vorigen Ausführungsbeispielen. Das Filterelement 10 weist an der Endscheibe 26 des inneren Filtermediumkörpers 12 an der zweiten Stirnseite Abstützelemente 31 auf, mit welchen das Filterelement 10 bei geschlossenem Filtergehäuse 110 am zweiten Gehäuseteil 114 abgestützt ist. Dabei ist das Filterelement 10 auch auf einem Zentrierelement 122 des zweiten Gehäuseteils 114 angeordnet. Die Abdichtung des Filterelements 10 gegenüber dem Filtergehäuse 110 unterscheidet sich jedoch von den beiden vorigen Ausführungsbeispielen, da dieses keine äußere Hülse 51 aufweist.

Die gemeinsame Endscheibe 24, 44 der Filtermediumkörper 12, 32 an der ersten Stirnseite 14, 34 weist ein integriertes Dichtelement 28 auf, welches zur Abdichtung in axialer und/oder radialer Richtung 80, 82 zwischen der Rohseite 60 und der Reinseite 62 bei bestimmungsgemäßem Einbau des Filterelements 10 in dem Filtergehäuse 110 ausgebildet ist. Das Dichtelement 28 ist als hervorstehender Wulst in Figur 8 deutlich erkennbar.

Das Dichtelement 28 ist dabei an einer radialen Innenkante 48 der Endscheibe 24 angeordnet.

Zwischen den beiden Filtermediumkörpern 12, 32 weist das Rahmenelement 50 einen zumindest teilweise für das Fluid durchlässigen Bereich 52 auf, während der Bereich des inneren Filtermediumkörpers 12, welcher nicht von dem äußeren Filtermediumkörper 12 umschlossen ist, von einem fluidundurchlässigen Bereich 53 des Rahmenelements 50 abgedeckt ist, der den Mantel 53' bildet.

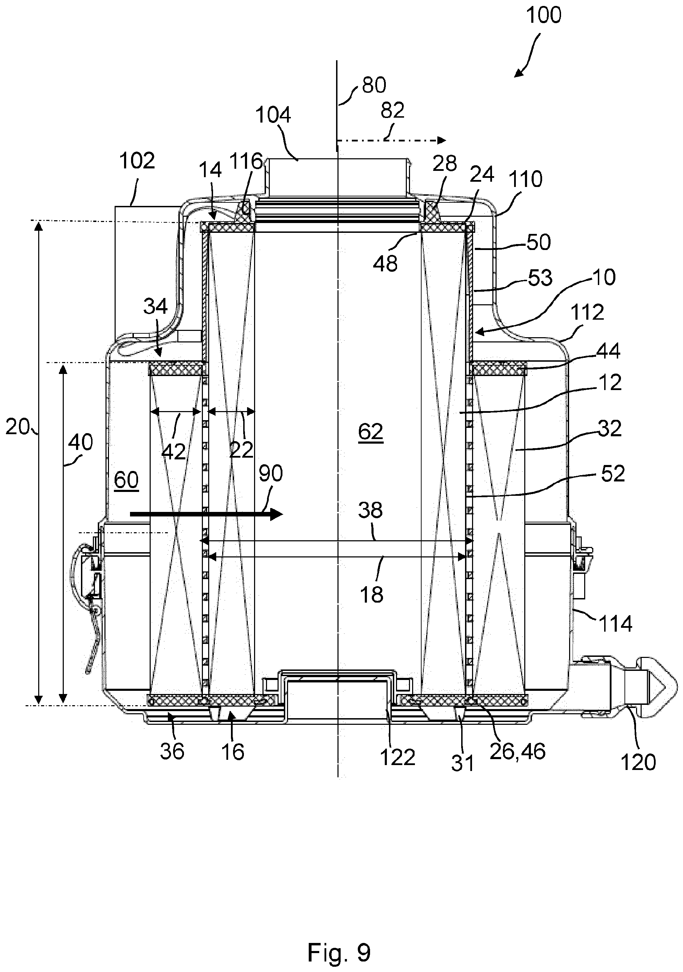

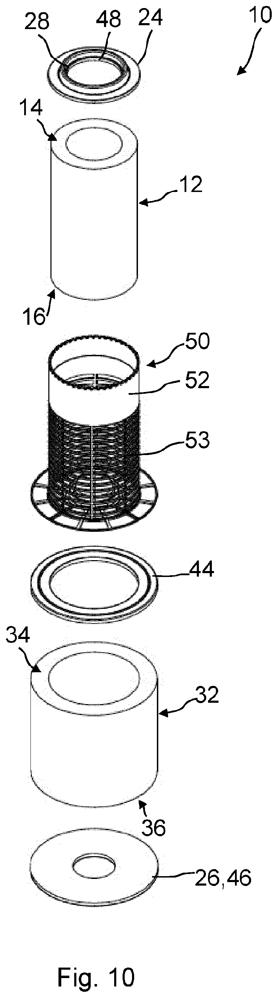

Figur 9 zeigt einen Längsschnitt durch ein Filtersystem 100 nach einem weiteren Ausführungsbeispiel der Erfindung, während in Figur 10 eine isometrische Explosionsdarstellung des Filterelements 10 nach Figur 9 dargestellt ist.

Das Filtergehäuse 110 weist einen radialen Fluideinlass 102 und einen zentralen Fluidauslass 104 im ersten Gehäuseteil 112 auf. Weiter ist am zweiten Gehäuseteil 114 ein Schmutzauslass 120 angeordnet, über welchen grobe Schmutzpartikel, die sich im Filtergehäuse 110 sammeln, abgeführt werden können. Die Strömungsrichtung 90 ist wie bei den vorigen Ausführungsbeispielen in radialer Richtung 82 von außen nach innen gerichtet.

Beide Filtermediumkörper 12, 32 sind an einer gemeinsamen Endscheibe 26, 46 bezüglich der zweiten Stirnseiten 16, 36 bündig angeordnet. Das Rahmenelement 50 ist an den ersten Stirnseiten 16, 36 der beiden Filtermediumkörper 12, 32 von der Endscheibe 26, 46 insbesondere formschlüssig, umschlossen.

Die gemeinsame Endscheibe 26, 46 weist Abstützelemente 31 zur Abstützung am zweiten Gehäuseteil 114 bei geschlossenem Filtergehäuse 110 auf.

Die Endscheibe 24 des inneren Filtermediumkörpers 12 weist an ihrer radialen Innenkante 48 ein in axialer Richtung 80 gerichtetes Dichtelement 28 zur Abdichtung zwischen Rohseite 60 und Reinseite 62 des Filtersystems 100 auf.

Zwischen den beiden Filtermediumkörpern 12, 32 weist das Rahmenelement 50 einen zumindest teilweise für das Fluid fluiddurchlässigen Bereich 52 auf, während der Bereich des inneren Filtermediumkörpers 12, welcher nicht von den äußeren Filtermediumkörper 12 umschlossen ist, von einem fluidundurchlässigen Bereich 53 des Rahmenelements 50 abgedeckt ist und der den Mantel 53' bildet.

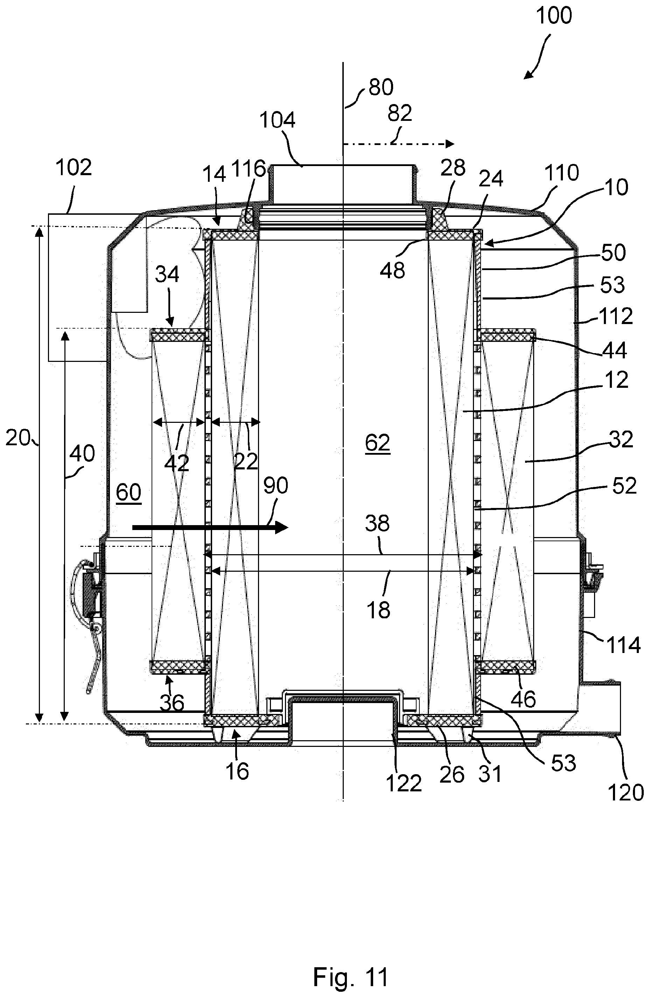

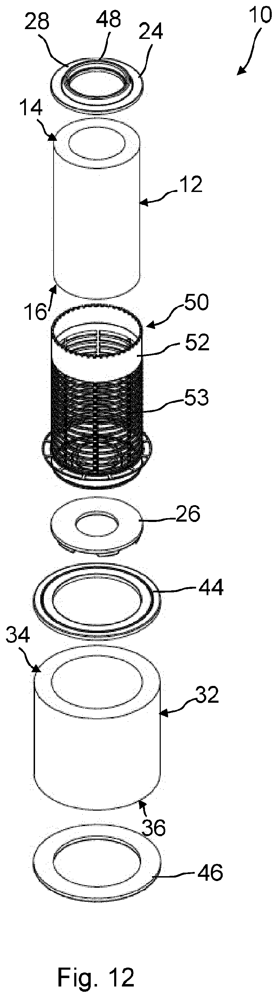

Figur 11 zeigt einen Längsschnitt durch ein Filtersystem 100 nach einem weiteren Ausführungsbeispiel der Erfindung, während in Figur 12 eine isometrische Explosionsdarstellung des Filterelements 10 nach Figur 11 dargestellt ist.

Bei diesem Ausführungsbeispiel, welches in den Fluideinlass 102 und Fluidauslass 104 dem in Figur 9 dargestellten Ausführungsbeispiel gleicht, sind die beiden Filtermediumkörper 12, 32 bezüglich ihrer beiden Stirnseiten 14, 16; 34, 36 beidseitig versetzt angeordnet.

Die Fluiddurchströmung sowie die Abdichtung zwischen Rohseite 60 und Reinseite 62 ist wie bei dem Ausführungsbeispiel in Figur 9 ausgebildet. Die Endscheiben 24, 26; 44, 46 der beiden Filtermediumkörper 12, 32 sind jeweils separat ausgebildet.

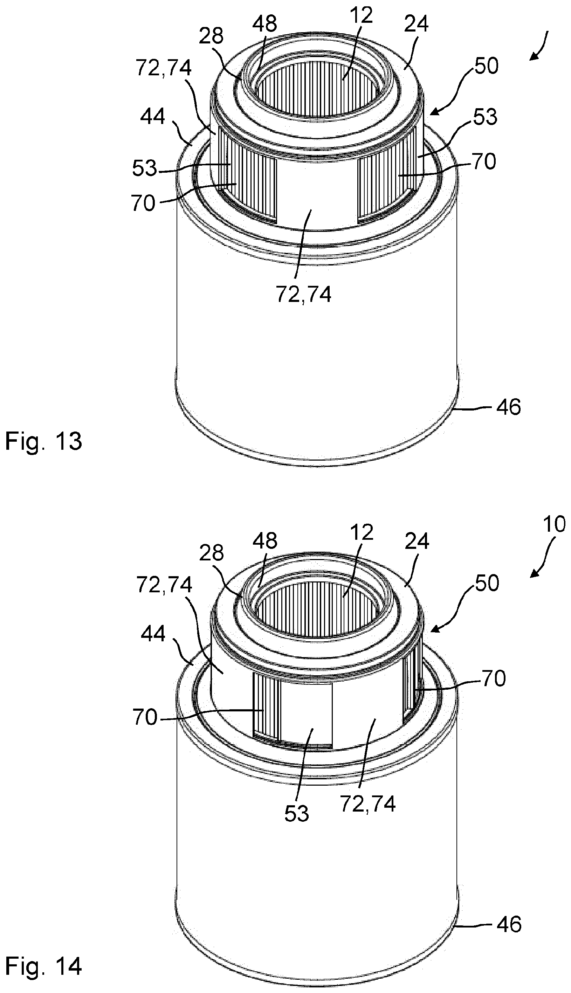

Figur 13 zeigt eine isometrische Darstellung eines Filterelements 10 nach einem weiteren Ausführungsbeispiel der Erfindung, wobei der Mantel 53' wenigstens bereichsweise einen wenigstens zeitweise offenen Bereich 70 zur wenigstens zeitweisen Durchströmung mit dem Fluid aufweist, welcher mit einer schaltbaren Abdeckung 72 verschließbar ist. Die Abdeckung 72 ist als eine um die axiale Richtung 80 drehbare Schalthülse 74 ausgebildet.

Durch die unterschiedliche axiale Erstreckung 20, 40 der beiden Filtermediumkörper 12, 32 lässt sich innerhalb der Abstufung der beiden Filtermediumkörper 12, 32 eine schaltbare Abdeckung 72 anordnen, mit dem Ziel die Lebensdauer des hochwertigeren Filtermediumkörpers 12, beispielsweise des Aktivkohlebalgs, zu verlängern. Der Aktivkohlebalg kann bei geöffneter Abdeckung 72 zumindest teilweise umgangen werden.

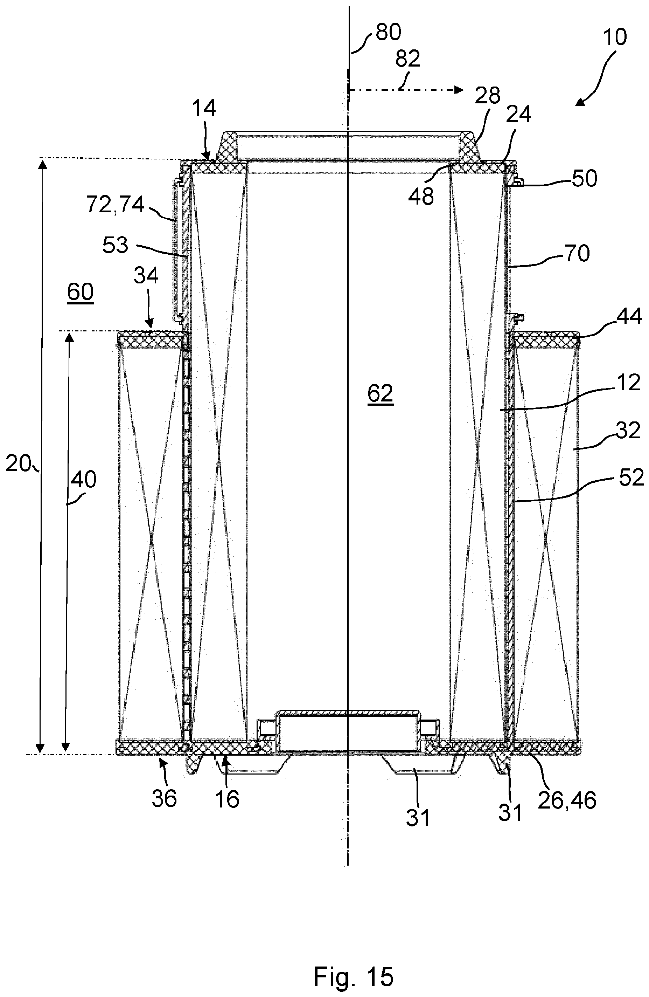

Bei diesem Ausführungsbeispiel weist ein eigentlich fluidundurchlässiger Bereich 53 des Rahmenelements 50 wenigstens bereichsweise einen wenigstens zeitweise offenen Bereich 70 zur wenigstens zeitweisen Durchströmung mit dem Fluid auf, welcher mit einer schaltbaren Abdeckung 72 verschließbar ist. Durch den offenen Bereich 70 kann das Fluid bei einer Durchströmung in radialer Richtung 82 (siehe Figur 15) von außen nach innen in einem Bypass den äußeren Filtermediumkörper 32 umgehen und so direkt einen Bereich des inneren Filtermediumkörpers 12 durchströmen.

Auf diese Weise kann die Lebensdauer eines hochwertigeren Filtermediumkörpers 12, beispielsweise eines Aktivkohlebalgs, verlängert werden, da bei geringer Schadgasbelastung in der Umgebung der offene Bereich 70 durch die drehbare Schalthülse 74 freigegeben werden kann, während bei hoher Schadgasbelastung in der Umgebung der offene Bereich 70 durch die Schalthülse 74 verschlossen wird.

Grundsätzlich lassen sich die Filterstufen (Partikelfiltration und Schadgasadsorption) durch die schaltbare Abdeckung 72, welche in Abhängigkeit von Umgebungsluftqualitätsdaten schaltbar ist, optimal nutzen.

Figur 14 zeigt dazu das Filterelement nach Figur 13 mit teilweise geschlossener Abdeckung 70. Die Schalthülse 74 ist dabei so gedreht, dass die Abdeckung 72 teilweise den offenen Bereich 70 verdeckt. Auf diese Weise kann die Größe des offenen Bereichs 70 an die Höhe der Schadgasbelastung bzw. Partikelbelastung angepasst werden.

In Figur 15 ist ein Längsschnitt durch das Filterelement nach Figur 13 dargestellt. Im Schnitt ist ein Teil des fluidundurchlässigen Bereichs 53 an der Außenseite des inneren Filtermediumkörpers 12 zu erkennen, der von der darüber liegenden Abdeckung 72 der drehbaren Schalthülse 74 in der dargestellten Stellung überdeckt wird. Auf der gegenüber liegenden Seite des Filtermediumkörpers 12 ist ein offener Bereich 70 zu erkennen.

Durch die unterschiedliche axiale Erstreckung 20, 40 der beiden Filtermediumkörper 12, 32 lässt sich innerhalb der Abstufung der beiden Filtermediumkörper 12, 32 eine schaltbare Abdeckung 72 anordnen, mit dem Ziel die Lebensdauer des hochwertigeren Filtermediumkörpers 12, beispielsweise des Aktivkohlebalgs, zu verlängern.

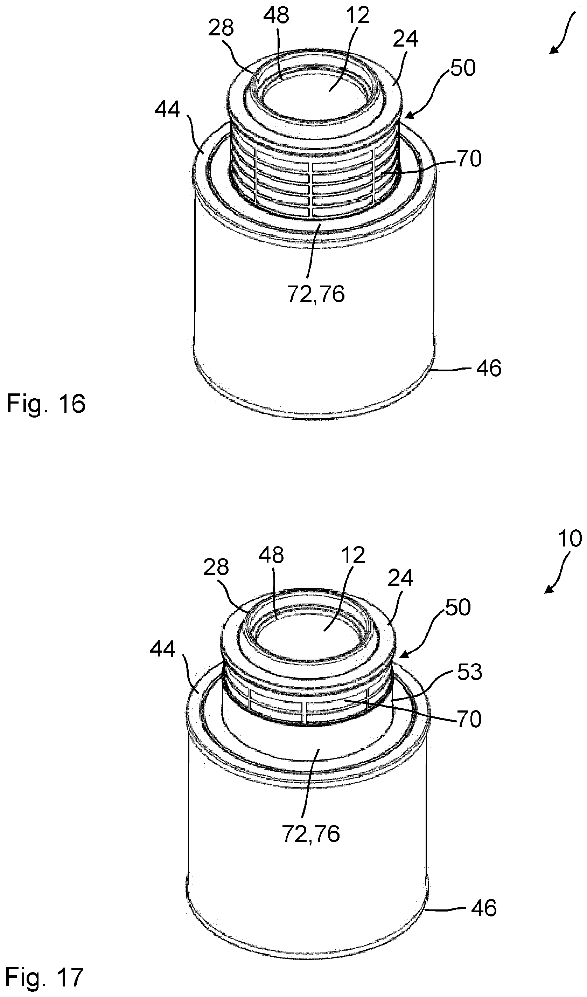

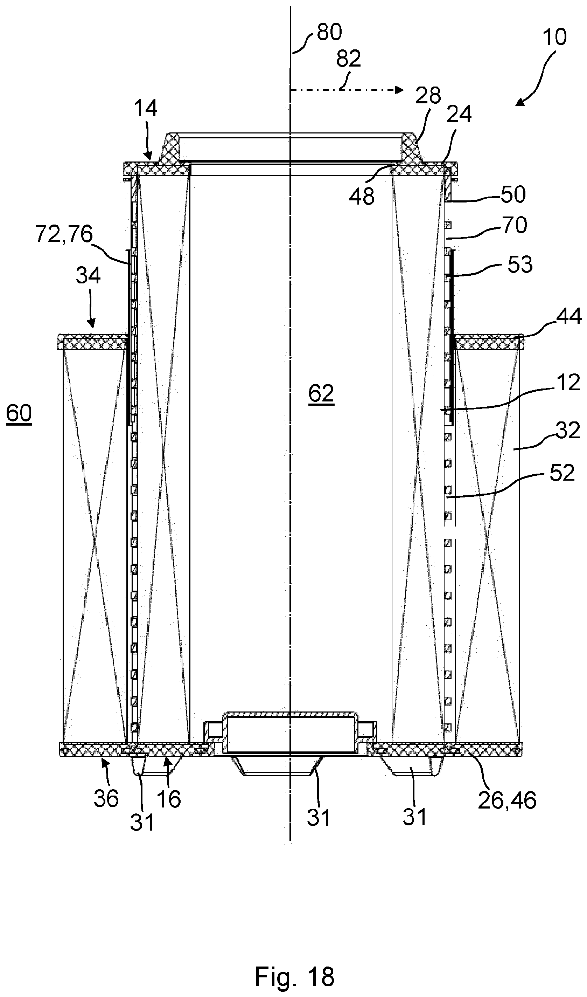

Figur 16 zeigt eine isometrische Darstellung eines Filterelements 10 nach einem weiteren Ausführungsbeispiel der Erfindung mit einer in der axialen Richtung 80 verschiebbaren Schalthülse 76 als Abdeckung 72. Figur 17 zeigt das Filterelement 10 mit teilweise geschlossener Abdeckung 72, während in Figur 18 ein Längsschnitt durch das Filterelement 10 mit teilweise geschlossener Abdeckung 72 dargestellt ist.

Bei diesem Ausführungsbeispiel ist die Abdeckung 72 als in der axialen Richtung 80 verschiebbare Schalthülse 76 ausgebildet, welche bei völliger Freigabe des offenen Bereichs 70 zwischen die beiden Filtermediumkörper 12, 32 zurückgeschoben werden kann, so dass der Teil des inneren Filtermediumkörpers 12, welcher den äußeren Filtermediumkörper 32 in axialer Richtung 80 überragt, komplett für die Durchströmung mit dem Fluid freigegeben ist. Je nach Schadgasbelastung beispielsweise kann die axial verschiebbare Schalthülse 76 einen mehr oder weniger großen Teil des offenen Bereichs 70 abdecken und so die Durchströmung mit dem Fluid begrenzen.

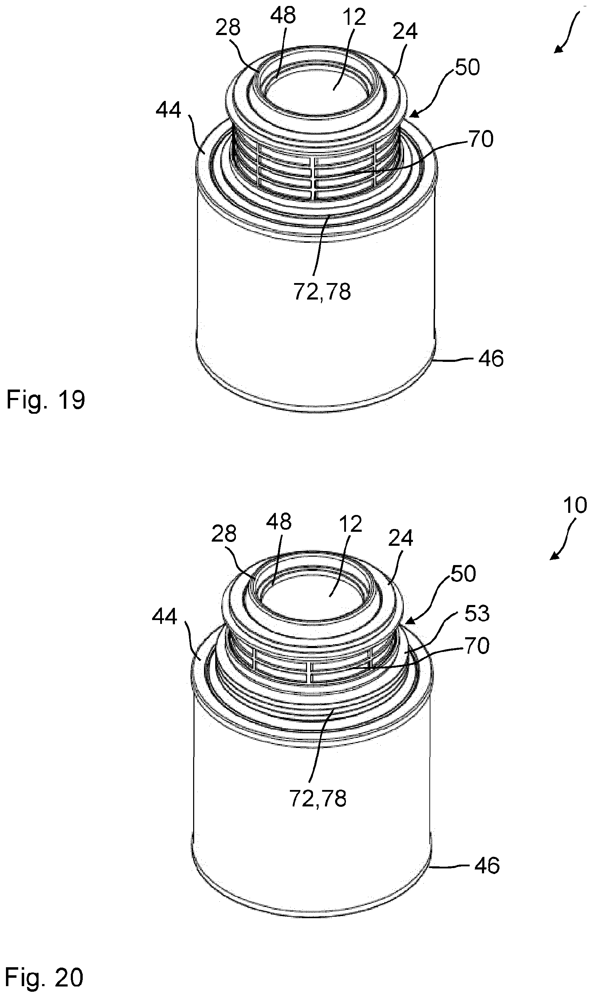

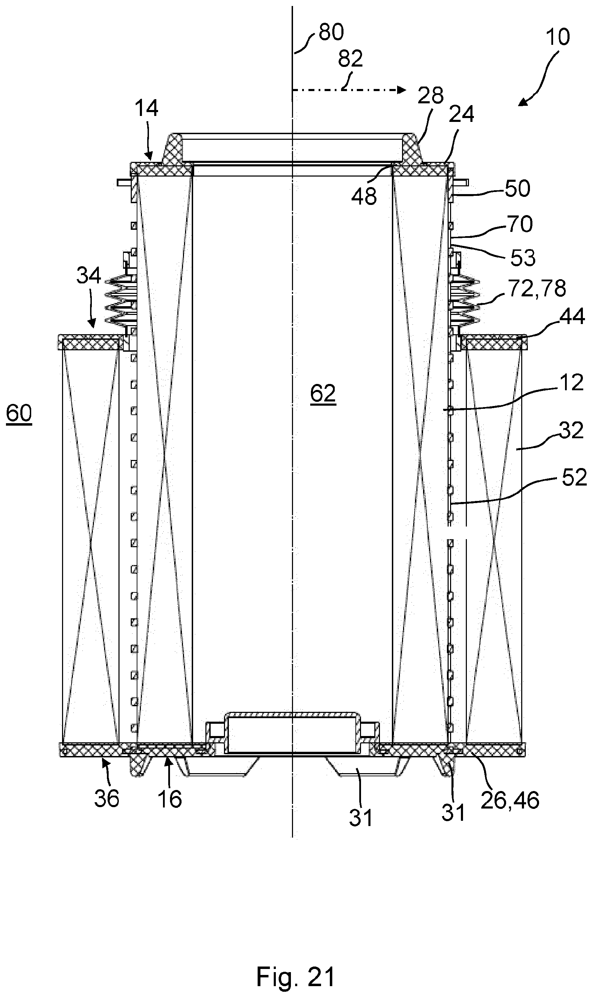

Figur 19 zeigt eine isometrische Darstellung eines Filterelements 10 nach einem weiteren Ausführungsbeispiel der Erfindung mit einem Faltenbalg 78 als Abdeckung 72. Figur 20 zeigt das Filterelement 10 mit teilweise geschlossener Abdeckung 72, während in Figur 21 ein Längsschnitt durch das Filterelement 10 dargestellt ist.

Bei diesem Ausführungsbeispiel ist die Abdeckung 72 als in der axialen Richtung 60 bewegliche Faltenbalg 78 ausgebildet, welcher über den den äußeren Filtermediumkörper 32 überragenden Teil des inneren Filtermediumkörpers 12 gezogen werden kann und so einen mehr oder weniger großen offenen Bereich 70 für die Durchströmung mit Fluid freigeben kann. Bei vollständiger Freigabe des offenen Bereichs 70 liegt der Faltenbalg 78 an der ersten Stirnseite 34 des äußeren Filtermediumkörpers 32 auf der Endscheibe 44 auf.

### Bezugszeichen

| | | | |
|---|---|---|---|
| 10 | Filterelement | 53 | fluidundurchlässiger Bereich |
| 12 | Filtermediumkörper | 54 | Dichtelement |
| 14 | erste Stirnseite | 55 | Dichtungsaufnahme |
| 16 | zweite Stirnseite | 56 | Falte |
| 18 | äußerer Durchmesser | 58 | Stirnkante |
| 20 | axiale Erstreckung | 60 | Rohseite |
| 22 | Dicke | 62 | Reinseite |
| 24 | Endscheibe | 70 | Öffnung |
| 26 | Endscheibe | 72 | schaltbare Abdeckung |
| 28 | Dichtelement | 74 | Schalthülse / drehbare Hülse |
| 29 | Dichtelement | 76 | Schalthülse / verschiebbare Hülse |
| 30 | Abdichtungsmaterial | 78 | Faltenbalg |
| 31 | Abstützelement | 80 | axiale Richtung |
| 32 | Filtermediumkörper | 82 | radiale Richtung |
| 34 | erste Stirnseite | 90 | Strömungsrichtung |
| 36 | zweite Stirnseite | 100 | Filtersystem |
| 38 | innerer Durchmesser | 102 | Fluideinlass |
| 40 | axiale Erstreckung | 104 | Fluidauslass |
| 42 | Dicke | 110 | Filtergehäuse |
| 44 | Endscheibe | 112 | erstes Gehäuseteil |
| 46 | Endscheibe | 114 | zweites Gehäuseteil |
| 48 | radiale Innenkante | 116 | Dichtsitz |
| 49 | radiale Außenkante | 118 | Flansch |
| 50 | Rahmenelement | 120 | Schmutzauslass |
| 51 | äußere Hülse | 122 | Zentrierelement |
| 52 | fluiddurchlässiger Bereich | | |
| 53' | Mantel | | |

## Patentansprüche

1. Filterelement (10) zum Filtern eines Fluids, insbesondere Luftfilterelement, für ein Filtersystem (100), insbesondere für ein Luftfiltersystem eines Brennstoffzellensystems oder für ein Innenraumluftfiltersystem eines Kraftfahrzeugs, mit wenigstens zwei jeweils als Hohlzylinder ausgebildeten Filtermediumkörpern (12, 32), die sich entlang einer axialen Richtung (80) erstrecken und jeweils in Radialrichtung sowie nacheinander von dem Fluid durchströmbar sind,
wobei ein äußerer Durchmesser (18) des einen der wenigstens zwei Filtermediumkörper (12, 32) kleiner ist als ein innerer Durchmesser (38) des anderen der wenigstens zwei Filtermediumkörper (12, 32),
und wobei der eine der wenigstens zwei Filtermediumkörper (12, 32) wenigstens bereichsweise entlang der axialen Richtung (80) radial innerhalb des anderen der wenigstens zwei Filtermediumkörper (12, 32) angeordnet ist und bezüglich der axialen Richtung (80) aus diesem heraus ragt,
und wobei an einer Außenmantelfläche eines aus dem anderen der wenigstens zwei Filtermediumkörper (12, 32) heraus ragenden Abschnitts des einen der wenigstens zwei Filtermediumkörper (12, 32) ein zumindest teilumfänglicher Mantel (53') angeordnet ist, der dazu ausgebildet ist, die Außenmantelfläche zumindest zeitweise fluidundurchlässig zu verschließen,
und wobei einer der wenigstens zwei Filtermediumkörper (12, 32) als Partikelfilter ausgebildet ist und ein anderer der Filtermediumkörper (12, 32) als Adsorptionsfilter ausgebildet ist, wobei an den wenigstens zwei Filtermediumkörpern (12, 32) wenigstens bereichsweise ein Rahmenelement (50) angeordnet ist, und wobei wenigstens ein Bereich (52) des Rahmenelements (50), welcher sich zwischen den wenigstens zwei Filtermediumkörpern (12, 32) erstreckt, wenigstens bereichsweise für die Durchströmung mit dem Fluid durchlässig ist, und wobei der Mantel (53') durch einen fluidundurchlässigen Bereich (53) des Rahmenelements (50) gebildet ist.

2. Filterelement nach einem der vorhergehenden Ansprüche, wobei der in einer bestimmungsgemäßen Strömungsrichtung (90) zuerst durchströmbare Filtermediumkörper (12, 32) als Partikelfilter ausgebildet ist, und/oder wobei der in der Strömungsrichtung (90) folgende Filtermediumkörper (12, 32) als Adsorptionsfilter, insbesondere als Aktivkohlefilter und/oder als Ionentauscher, ausgebildet ist.

3. Filterelement nach einem der Ansprüche 1 bis 2, wobei der fluidundurchlässige Bereich (53) des Rahmenelements (50) sich in der axialen Richtung (80) an den fluiddurchlässigen Bereich (52) anschließt.

4. Filterelement nach einem der Ansprüche 1 bis 3, wobei die wenigstens zwei Filtermediumkörper (12, 32) eine unterschiedliche axiale Erstreckung (20, 40) aufweisen, und/oder
wobei die wenigstens zwei Filtermediumkörper (12, 32) eine unterschiedliche Dicke (22, 42) aufweisen, und wobei optional der eine der wenigstens zwei Filtermediumkörper (12, 32) mit einer axialen Erstreckung (20, 40), die größer ist als die axiale Erstreckung (20, 40) des anderen der wenigstens zwei Filtermediumkörper (12, 32), radial innerhalb oder außerhalb des anderen der wenigstens zwei Filtermediumkörper (12, 32) angeordnet ist.

5. Filterelement nach Anspruch 4, wobei der eine der wenigstens zwei Filtermediumkörper (12, 32) mit einer Dicke (22, 42), die größer ist als die Dicke (22, 42) des anderen der wenigstens zwei Filtermediumkörper (12, 32), radial innerhalb oder außerhalb des anderen der wenigstens zwei Filtermediumkörper (12, 32) angeordnet ist.

6. Filterelement nach einem der vorhergehenden Ansprüche,
wobei die wenigstens zwei Filtermediumkörper (12, 32) bezüglich wenigstens einer ihrer beiden Stirnseiten (14, 16; 34, 36) bündig angeordnet sind oder
wobei die wenigstens zwei Filtermediumkörper (12, 32) bezüglich ihrer beiden Stirnseiten (14, 16; 34, 36) beidseitig versetzt angeordnet sind.

7. Filterelement nach einem der vorhergehenden Ansprüche, wobei die Strömungsrichtung (90) des Fluids in radialer Richtung (82) nach außen oder nach innen gerichtet ist.

8. Filterelement nach einem der vorhergehenden Ansprüche, wobei der Mantel (53'), insbesondere der durch den fluidundurchlässigen Bereich (53) des Rahmenelements (50) gebildete Mantel (53'), wenigstens an einer ersten und/oder zweiten Stirnseite (14, 16; 34, 36) der wenigstens zwei Filtermediumkörper (12, 32) mit einer Endscheibe (24, 26; 44, 46) verbunden ist, insbesondere in die Endscheibe (24, 26; 44, 46) eingebettet ist.

9. Filterelement nach einem der vorhergehenden Ansprüche, wobei das Rahmenelement (50) eine äußere Hülse (51) aufweist, die eine Außenmantelfläche eines radial äußeren (32) der wenigstens zwei Filtermediumkörper (12,32) umgibt, wobei insbesondere die äußere Hülse (51) des Rahmenelements (50) fluidundurchlässig ausgebildet ist und mit einer der Endscheiben (34) verbunden ist.

10. Filterelement nach einem der vorhergehenden Ansprüche, wobei das Rahmenelement (50) wenigstens ein Dichtelement (28, 38, 54) aufweist, welches zur Abdichtung in axialer und/oder radialer Richtung (80, 82) zwischen einer Rohseite (60) und einer Reinseite (62) bei bestimmungsgemäßem Einbau des Filterelements (10) in einem Filtergehäuse (110) des Filtersystems (100) ausgebildet ist,
insbesondere wobei das Dichtelement (54) radial außerhalb der wenigstens zwei Filtermediumkörper (12, 32) angeordnet ist und zur Abdichtung zwischen einem ersten Gehäuseteil (112) und einem zweiten Gehäuseteil (114) des Filtergehäuses (110) des Filtersystems (100) ausgebildet ist, wobei optional das Dichtelement (28, 38, 54) an der äußeren Hülse (51) des Rahmenelements (50) angeordnet ist und insbesondere in der axialen Richtung (80) von der Endscheibe (34) beabstandet ist.

11. Filterelement nach Anspruch 8 bis 10, wobei wenigstens eine der Endscheiben (24, 26; 44, 46) ein integriertes Dichtelement (28, 29) aufweist, welches zur Abdichtung in axialer und/oder radialer Richtung (80, 82) zwischen der Rohseite (60) und der Reinseite (62) bei bestimmungsgemäßem Einbau des Filterelements (10) in dem Filtergehäuse (110) ausgebildet ist, wobei optional das Dichtelement (28, 29) an einer radialen Innenkante (48) oder an einer radialen Außenkante (49) der Endscheibe (24, 26; 44, 46) angeordnet ist.

12. Filterelement nach einem der vorhergehenden Ansprüche, wobei der erste und/oder der zweite Filtermediumkörper (12, 32) als gefalteter Filterbalg, als Wickelkörper, als Schüttung oder als insbesondere beschichteter Wabenkörper ausgebildet ist.

13. Filterelement nach einem der vorhergehenden Ansprüche, wobei wenigstens einer der beiden Filtermediumkörper (12, 32) als gefalteter Filterbalg ausgebildet ist,
wobei der erste und/oder der zweite Filtermediumkörper (12, 32) endscheibenfrei ausgebildet ist,
wobei Stirnkanten (58) von Falten (56) des wenigstens einen der beiden Filtermediumkörper (12, 32) an dessen ersten und/oder zweiten Stirnseite (14, 16; 34, 36) zwischen den Falten (56) mit einem Abdichtungsmaterial (30) abgedichtet sind.

14. Filterelement nach einem der vorhergehenden Ansprüche, wobei der Mantel (53'), insbesondere der durch den fluidundurchlässigen Bereich (53) des Rahmenelements (50) gebildete Mantel (53'), wenigstens bereichsweise einen wenigstens zeitweise offenen Bereich (70) zur wenigstens zeitweisen Durchströmung mit dem Fluid aufweist, welcher mit einer schaltbaren Abdeckung (72) verschließbar ist, wobei optional die Abdeckung (72) als um die axiale Richtung (80) drehbare Schalthülse (74), und/oder als in der axialen Richtung (80) verschiebbare Schalthülse (76), und/oder als in der axialen Richtung (80) beweglichen Faltenbalg (78), und/oder als Rollo ausgebildet ist.

15. Filtersystem (100) zum Filtern eines Fluids, insbesondere zum Filtern von Luft, insbesondere eines Brennstoffzellensystems oder Innenraumluftfiltersystems eines Kraftfahrzeugs, mit einem Filtergehäuse (110) mit einem Fluideinlass (102) und einem Fluidauslass (104), und mit wenigstens einem Filterelement (10) nach einem der vorhergehenden Ansprüche, welches zwischen dem Fluideinlass (102) und dem Fluidauslass (104) in dem Filtergehäuse (110) angeordnet ist.

## Claims

1. A filter element (10) for filtering a fluid, in particular an air filter element, for a filter system (100), in particular for an air filter system of a fuel cell system or for a cabin air filter system of a motor vehicle, having at least two filter medium bodies, each designed as a hollow cylinder (12, 32), extending along an axial direction (80) and through which the fluid can flow radially and sequentially,
wherein an outer diameter (18) of one of the at least two filter medium bodies (12, 32) is smaller than an inner diameter (38) of the other of the at least two filter medium bodies (12, 32),
and wherein the one of the at least two filter medium bodies (12, 32) is disposed, at least in some areas, radially inside the other of the at least two filter medium bodies (12, 32) along the axial direction (80) and protrudes from it with respect to the axial direction (80),
and wherein an at least partially cylindrical surface (53') is disposed on an external cylindrical surface of a section of one of the at least two filter medium bodies (12, 32) that protrudes from the other of the at least two filter medium bodies (12, 32), the cylindrical surface being configured to seal the external cylindrical surface in a fluid-impermeable manner at least temporarily,
and wherein one of the at least two filter medium bodies (12, 32) is designed as a particle filter and another of the filter medium bodies (12, 32) is designed as an adsorption filter, wherein a frame element (50) is disposed at least in some areas on the at least two filter medium bodies (12, 32), and wherein at least one area (52) of the frame element (50), which extends between the at least two filter medium bodies (12, 32), is permeable to the fluid flow at least in some areas, and wherein the cylindrical surface (53') is formed by a fluid-impermeable area (53) of the frame element (50).

2. The filter element according to one of the preceding claims, wherein the filter medium body (12, 32) through which the fluid first flows in an intended flow direction (90) is designed as a particle filter, and/or wherein the filter medium body (12, 32) following in the flow direction (90) is designed as an adsorption filter, in particular as an activated carbon filter and/or as an ion exchanger.

3. The filter element according to one of the claims 1 to 2, wherein the fluid-impermeable area (53) of the frame element (50) adjoins the fluid-permeable area (52) in the axial direction (80).

4. The filter element according to one of the claims 1 to 3, wherein the at least two filter medium bodies (12, 32) feature a different axial extension (20, 40), and/or wherein the at least two filter medium bodies (12, 32) feature different thicknesses (22, 42), and wherein, optionally, the one of the at least two filter medium bodies (12, 32) with an axial extension (20, 40) greater than the axial extension (20, 40) of the other of the at least two filter medium bodies (12, 32) is disposed radially inside or outside the other of the at least two filter medium bodies (12, 32).

5. The filter element according to claim 4, wherein one of the at least two filter medium bodies (12, 32), with a thickness (22, 42) greater than the thickness (22, 42) of the other of the at least two filter medium bodies (12, 32), is disposed radially inside or outside the other of the at least two filter medium bodies (12, 32).

6. The filter element according to one of the preceding claims,
wherein the at least two filter medium bodies (12, 32) are disposed flush with respect to at least one of their two front faces (14, 16; 34, 36), or
wherein the at least two filter medium bodies (12, 32) are bilaterally offset relative to their two front faces (14, 16; 34, 36).

7. The filter element according to one of the preceding claims, wherein the flow direction (90) of the fluid is directed outwardly or inwardly in the radial direction (82).

8. The filter element according to one of the preceding claims, wherein the cylindrical surface (53'), in particular the cylindrical surface (53') designed by the fluid-impermeable area (53) of the frame element (50), is connected at least at a first and/or second front face (14, 16; 34, 36) of the at least two filter medium bodies (12, 32) to an end disc (24, 26; 44, 46), in particular is embedded in the end disc (24, 26; 44, 46).

9. The filter element according to one of the preceding claims, wherein the frame element (50) features an outer sleeve (51) surrounding an external cylindrical surface of a radially outer (32) one of the at least two filter medium bodies (12, 32), wherein, in particular, the outer sleeve (51) of the frame element (50) is designed to be fluid-impermeable and is connected to one of the end discs (34).

10. The filter element according to one of the preceding claims, wherein the frame element (50) features at least one sealing element (28, 38, 54), which is designed to provide a seal in the axial and/or radial directions (80, 82) between a raw side (60) and a clean side (62) when the filter element (10) is installed as intended in a filter housing (110) of the filter system (100),
in particular, wherein the sealing element (54) is disposed radially outside the at least two filter medium bodies (12, 32) and is configured for sealing between a first housing component (112) and a second housing component (114) of the filter housing (110) of the filter system (100), wherein, optionally, the sealing element (28, 38, 54) is disposed on the outer sleeve (51) of the frame element (50) and, in particular, is spaced apart from the end disc (34) in the axial direction (80).

11. The filter element according to claims 8 through 10, wherein at least one of the end discs (24, 26; 44, 46) features an integrated sealing element (28, 29) which, when the filter element (10) is installed as intended in the filter housing (110), provides a seal in the axial and/or radial direction (80, 82) between the raw side (60) and the clean side (62), wherein the sealing element (28, 29) is optionally disposed on a radial inner edge (48) or on a radial outer edge (49) of the end disc (24, 26; 44, 46).

12. The filter element according to one of the preceding claims, wherein the first and/or the second filter medium body (12, 32) is designed as a pleated filter bellows, a winding body, a fixed bed, or, in particular, a coated honeycomb structure.

13. The filter element according to one of the preceding claims, wherein at least one of the two filter medium bodies (12, 32) is designed as a pleated filter bellows,
wherein the first and/or the second filter medium body (12, 32) is designed without end discs,
wherein front edges (58) of folds (56) of the at least one of the two filter medium bodies (12, 32) at its first and/or second front face (14, 16; 34, 36) are sealed between the folds (56) with a sealing material (30).

14. The filter element according to one of the preceding claims, wherein the jacket (53'), in particular the jacket (53') designed by the fluid-impermeable area (53) of the frame element (50), features, at least in some areas, an at least temporarily open area (70) for an at least temporary throughflow of the fluid, which can be closed by a switchable cover (72), wherein the cover (72) can optionally be designed as a switch sleeve (74) rotatable about the axial direction (80), and/or as a switch sleeve (76) displaceable in the axial direction (80), and/or as a bellows (78) movable in the axial direction (80), and/or as a roller blind.

15. A filter system (100) for filtering a fluid, in particular for filtering air, in particular for a fuel cell system or a cabin air filter system of a motor vehicle, having a filter housing (110) with a fluid inlet (102) and a fluid outlet (104), and having at least one filter element (10) according to one of the preceding claims, which is disposed between the fluid inlet (102) and the fluid outlet (104) in the filter housing (110).

## Revendications

1. Élément filtrant (10) destiné à filtrer un fluide, en particulier élément filtrant à air, pour un système de filtre (100), en particulier pour un système de filtre à air d'un système de pile à combustible ou pour un système de filtre à air d'habitacle d'un véhicule automobile, ayant au moins deux corps de milieu filtrant (12, 32) réalisés chacun sous la forme d'un cylindre creux qui s'étendent le long d'une direction axiale (80) et peuvent chacun être traversés par le fluide dans la direction radiale ainsi que l'un après l'autre,
dans lequel le diamètre extérieur (18) de l'un des corps de milieu filtrant (12, 32), au moins au nombre de deux, est plus petit qu'un diamètre intérieur (38) de l'autre des corps de milieu filtrant (12, 32), au moins au nombre de deux, et dans lequel l'un des corps de milieu filtrant (12, 32), au moins au nombre de deux, est disposé, au moins dans certaines sections, le long de la direction axiale (80), radialement à l'intérieur de l'autre des corps de milieu filtrant (12, 32), au moins au nombre de deux, et fait saillie hors de celui-ci par rapport à la direction axiale (80),
et dans lequel, sur une surface d'enveloppe extérieure d'une partie de l'un des corps de milieu filtrant (12, 32), au moins au nombre de deux, faisant saillie hors de l'autre des corps de milieu filtrant (12, 32), au moins au nombre de deux, est disposée une enveloppe (53') au moins partiellement sur la circonférence, qui est conçue pour obturer, au moins temporairement, la surface d'enveloppe extérieure de manière imperméable aux fluides,
et dans lequel l'un des corps de milieu filtrant (12, 32), au moins au nombre de deux, est conçu comme un filtre à particules et un autre des corps de milieu filtrant (12, 32) est conçu comme un filtre à adsorption, dans lequel un élément de cadre (50) est disposé, au moins dans certaines sections, sur les corps de milieu filtrant (12, 32), au moins au nombre de deux, et dans lequel au moins une zone (52) de l'élément de cadre (50), qui s'étend entre les corps de milieu filtrant (12, 32), au moins au nombre de deux, est perméable, au moins dans certaines sections, au passage du fluide, et dans lequel l'enveloppe (53') est formée par une zone (53) de l'élément de cadre (50) imperméable aux fluides.

2. Élément filtrant selon l'une quelconque des revendications précédentes, dans lequel le corps de milieu filtrant (12, 32), traversable d'abord dans une direction d'écoulement prévue (90), est conçu comme un filtre à particules, et/ou dans lequel le corps de milieu filtrant (12, 32) suivant dans la direction d'écoulement (90) est conçu comme un filtre à adsorption, en particulier comme un filtre à charbon actif et/ou comme un échangeur d'ions.

3. Élément filtrant selon l'une quelconque des revendications 1 à 2, dans lequel la zone imperméable aux fluides (53) de l'élément de cadre (50) se raccorde, dans la direction axiale (80), à la zone perméable aux fluides (52).

4. Élément filtrant selon l'une quelconque des revendications 1 à 3, dans lequel les corps de milieu filtrant (12, 32), au moins au nombre de deux, présentent une extension axiale différente (20, 40), et/ou dans lequel les corps de milieu filtrant (12, 32), au moins au nombre de deux, présentent une épaisseur différente (22, 42), et dans lequel, en option, l'un des corps de milieu filtrant (12, 32), au moins au nombre de deux, présentant une extension axiale (20, 40) supérieure à l'extension axiale (20, 40) de l'autre des corps de milieu filtrant (12, 32), au moins au nombre de deux, est disposé radialement à l'intérieur ou à l'extérieur de l'autre des corps de milieu filtrant (12, 32), au moins au nombre de deux.

5. Élément filtrant selon la revendication 4, dans lequel l'un des corps de milieu filtrant (12, 32), au moins au nombre de deux, présentant une épaisseur (22, 42) supérieure à l'épaisseur (22, 42) de l'autre des corps de milieu filtrant (12, 32), au moins au nombre de deux, est disposé radialement à l'intérieur ou à l'extérieur de l'autre des corps de milieu filtrant (12, 32), au moins au nombre de deux.

6. Élément filtrant selon l'une quelconque des revendications précédentes,
dans lequel les corps de milieu filtrant (12, 32), au moins au nombre de deux, sont disposés à fleur l'un par rapport à l'autre au niveau d'au moins l'une de leurs deux faces frontales (14, 16; 34, 36) ou
dans lequel les corps de milieu filtrant (12, 32), au moins au nombre de deux, sont disposés de façon décalée des deux côtés par rapport à leurs deux faces frontales (14, 16; 34, 36).

7. Élément filtrant selon l'une quelconque des revendications précédentes, dans lequel la direction d'écoulement (90) du fluide est orientée vers l'extérieur ou vers l'intérieur dans la direction radiale (82).

8. Élément filtrant selon l'une quelconque des revendications précédentes, dans lequel l'enveloppe (53'), en particulier l'enveloppe (53') formée par la zone imperméable aux fluides (53) de l'élément de cadre (50), est reliée au moins au niveau d'une première et/ou d'une deuxième face frontale (14, 16; 34, 36) des corps de milieu filtrant (12, 32), au moins au nombre de deux, à un disque d'extrémité (24, 26; 44, 46), en particulier est encastrée dans le disque d'extrémité (24, 26; 44, 46).

9. Élément filtrant selon l'une quelconque des revendications précédentes, dans lequel l'élément de cadre (50) présente une douille extérieure (51) qui entoure une surface d'enveloppe extérieure d'un corps de milieu filtrant radialement extérieur (32) parmi les corps de milieu filtrant (12, 32), au moins au nombre de deux, dans lequel la douille extérieure (51) de l'élément de cadre (50) est en particulier réalisée de manière imperméable aux fluides et reliée à l'un des disques d'extrémité (34).

10. Élément filtrant selon l'une quelconque des revendications précédentes, dans lequel l'élément de cadre (50) présente au moins un élément d'étanchéité (28, 38, 54) conçu pour assurer l'étanchéité dans la direction axiale et/ou radiale (80, 82) entre un côté brut (60) et un côté pur (62) lorsque l'élément filtrant (10) est monté, conformément à son utilisation, dans un boîtier de filtre (110) du système de filtre (100),
en particulier dans lequel l'élément d'étanchéité (54) est disposé radialement à l'extérieur des corps de milieu filtrant (12, 32), au moins au nombre de deux, et est conçu pour assurer l'étanchéité entre un premier composant de boîtier (112) et un deuxième composant de boîtier (114) du boîtier de filtre (110) du système de filtre (100), dans lequel, en option, l'élément d'étanchéité (28, 38, 54) es disposé sur la douille extérieure (51) de l'élément de cadre (50) et est en particulier espacé du disque d'extrémité (34) dans la direction axiale (80).

11. Élément filtrant selon les revendications 8 à 10, dans lequel au moins l'un des disques d'extrémité (24, 26; 44, 46) présente un élément d'étanchéité intégré (28, 29) qui, lors d'un montage conforme de l'élément filtrant (10) dans le boîtier de filtre (110), assure l'étanchéité dans les directions axiale et/ou radiale (80, 82) entre le côté brut (60) et le côté pur (62), dans lequel l'élément d'étanchéité (28, 29) est disposé, en option, sur un bord radial intérieur (48) ou sur un bord radial extérieur (49) du disque d'extrémité (24, 26; 44, 46).

12. Élément filtrant selon l'une quelconque des revendications précédentes, dans lequel le premier et/ou le deuxième corps de milieu filtrant (12, 32) est réalisé sous la forme d'un soufflet de filtre plissé, d'une bobine, d'un lit ou d'un corps en forme de gaufre, en particulier revêtu.

13. Élément filtrant selon l'une quelconque des revendications précédentes, dans lequel au moins l'un des deux corps de milieu filtrant (12, 32) est réalisé sous la forme d'un soufflet de filtre plissé,
dans lequel le premier et/ou le deuxième corps de milieu filtrant (12, 32) est réalisé sans disque d'extrémité,
dans lequel les arêtes frontales (58) des plis (56) du corps de milieu filtrant (12, 32), au moins au nombre de deux, sont rendues étanches au niveau de sa première et/ou de sa deuxième face frontale (14, 16; 34, 36) entre les plis (56) à l'aide d'un matériau d'étanchéité (30).

14. Élément filtrant selon l'une quelconque des revendications précédentes, dans lequel l'enveloppe (53'), en particulier l'enveloppe (53') formée par la zone imperméable aux fluides (53) de l'élément de cadre (50), présente, au moins dans certaines sections, une zone (70) ouverte au moins temporairement pour permettre le passage, au moins temporairement, du fluide, laquelle zone peut être fermée par un recouvrement commutable (72), le recouvrement (72) pouvant être réalisé, en option, sous la forme d'une douille de commande (74) pouvant tourner autour de la direction axiale (80), et/ou sous la forme d'une douille de commande (76) pouvant coulisser dans la direction axiale (80), et/ou sous la forme d'un soufflet de filtre (78) mobile dans la direction axiale (80), et/ou sous la forme d'un store.

15. Système de filtre (100) destiné à filtrer un fluide, en particulier à filtrer de l'air, en particulier d'un système de pile à combustible ou d'un système de filtre à air d'habitacle d'un véhicule automobile, ayant un boîtier de filtre (110) muni d'une entrée de fluide (102) et d'une sortie de fluide (104), et ayant au moins un élément filtrant (10) selon l'une quelconque des revendications précédentes, qui est disposé entre l'entrée de fluide (102) et la sortie de fluide (104) dans le boîtier de filtre (110).
